# NEUE EUROPÄISCHE PATENTSCHRIFT

(11) **EP 1 932 618 B2**
(45) Veröffentlichungstag und Bekanntmachung des Hinweises auf die Entscheidung über den Einspruch: **22.02.2017**
(45) Hinweis auf die Patenterteilung: 03.11.2010
(21) Anmeldenummer: 07023792.0
(22) Anmeldetag: 07.12.2007
(51) Int. Cl.: B23Q 17/24, G05B 19/4069

(54) **Arbeitsmaschine**
Work machine
Machine de travail

(30) Priorität: 11.12.2006 DE 102006059819
(43) Veröffentlichungstag der Anmeldung: 18.06.2008
(73) Patentinhaber: Index-Werke GmbH & Co. KG Hahn & Tessky, 73730 Esslingen (DE)
(72) Erfinder: Seeger, Hartmut Prof. Dipl.-Ing., 70329 Stuttgart (DE); Maier, Thomas Prof. Dr. -Ing., 70563 Stuttgart (DE); Dudic, Ivan Dr. -Ing., 74321 Bietigheim-Bissingen (DE); Beck, Eberhard Dipl. -Ing., 73773 Aichwald (DE)
(74) Vertreter: Hoeger, Stellrecht & Partner Patentanwälte mbB

(56) Entgegenhaltungen:
- EP-A- 0 961 185
- EP-A1- 1 480 095
- EP-B1- 0 346 839
- WO-A-99/13386
- DE-A1-102004 048 037
- JP-A- 2002 066 878
- JP-A- 2002 123 306
- JP-A- 2004 227 411
- JP-A- 2006 085 328

## Beschreibung

Die Erfindung betrifft eine Drehmaschine gemäß dem Oberbegriff des Anspruchs 1, wie z.B. aus der DE-U-297 09 877 bekannt.

Derartige Drehmaschinen sind beispielsweise Werkzeugmaschinen mit Bearbeitungseinheiten, wie beispielsweise Werkzeugträger, insbesondere Werkzeugrevolver, Linearwerkzeugträger, Reitstöcke, Lünetten, Pinolen, Handhabungseinheiten, oder Werkstückträger, insbesondere Werkstückspindeln, Werkstückaufnahmetische.

Derartige Drehmaschinen können aber auch komplexe Handhabungseinrichtungen für Werkstücke umfassen, wie Roboter zum Bewegen von Werkstücken oder Werkstückaufnahmen oder Werkzeugen oder Werkzeugaufnahmen oder Werkstücktransporteinrichtungen oder Werkzeugtransporteinrichtungen.

Bei diesen Drehmaschinen besteht stets dann, wenn Werkstücke oder Werkzeuge schnellen Bewegungen ausgesetzt sind, ein Sicherheitsrisiko für eine Bedienungsperson, so dass einerseits dafür Sorge getragen werden muss, dass diese Bedienungsperson bei laufender Drehmaschine nicht in den Arbeitsraum hineingreifen oder hineingehen kann, andererseits aber auch dafür Sorge getragen werden muss, dass bei sich im Arbeitsraum, beispielsweise im Fall von Bruchsituationen oder Kollisionssituationen, lösenden Teilen, die dann durch den Arbeitsraum fliegen können, die Bedienungsperson nicht getroffen wird.

Auf der anderen Seite besteht für eine Bedienungsperson beim Betreiben einer derartigen Drehmaschine die Notwendigkeit, die Arbeitsvorgänge beobachten zu können, beispielsweise um die Maschine einzurichten oder beispielsweise um neue Arbeitsvorgänge entwickeln und testen oder Kollisionssituationen oder Maschinenschäden verhindern oder zumindest analysieren zu können.

Der Erfindung liegt daher die Aufgabe zugrunde, eine Drehmaschine der gattungsgemäßen Art derart zu verbessern, dass bei dieser eine sichere Beobachtung eines Arbeitsvorgangs durch eine Bedienungsperson möglich ist.

Diese Aufgabe wird bei einer Drehmaschine der eingangs beschriebenen Art erfindungsgemäß durch die Merkmale des Anspruchs 1 gelöst.

Der Vorteil der erfindungsgemäßen Lösung ist darin zu sehen, dass die elektronische Visualisierungseinrichtung keinerlei direkten Sichtkontakt der Bedienungsperson mit dem Arbeitsraum und den Arbeitseinheiten im Arbeitsraum erfordert, sondern die Möglichkeit schafft, die Arbeitsvorgänge aus dem geschützten Bereich heraus beobachten zu können.

Beispielsweise wäre es im Rahmen der erfindungsgemäßen Lösung denkbar, die Visualisierungseinrichtung in einer geschützten Kabine anzuordnen, so dass die Bedienungsperson aus der geschützten Kabine heraus die Arbeitsvorgänge im Arbeitsraum beobachten kann.

Um jedoch der Bedienungsperson in gewohnter Weise eine Bedienung der Drehmaschine zu ermöglichen, ist beispielsweise vorgesehen, dass die elektronische Visualisierungseinrichtung an einer Maschinenverhaubung der Drehmaschine direkt oder mittels eines Arms oder Trägers angeordnet ist.

Eine besonders günstige Lösung sieht hierbei vor, dass die elektronische Visualisierungseinrichtung nahe einer Zugangsöffnung zum Arbeitsraum angeordnet ist. Damit besteht die Möglichkeit, ein Einrichten der Maschine oder andere Wartungsarbeiten für die Bedienungsperson zu erleichtern, da diese somit einerseits unmittelbaren Zugang zum Arbeitsraum hat, andererseits die elektronische Visualisierungseinrichtung hierbei im Blick haben kann.

Die elektronische Visualisierungseinrichtung im Rahmen der erfindungsgemäßen Lösung kann mit sämtlichen bekannten bildgebenden Verfahren arbeiten. Beispielsweise wäre es denkbar, die elektronische Visualisierungseinrichtung als konventionellen Bildschirm oder als Flachbildschirm oder auch als Bildschirm mit einer Projektionseinrichtung auszuführen.

Hinsichtlich der von der Visualisierungseinrichtung dargestellten Arbeitsvorgänge wurden bislang keine näheren Angaben gemacht. So sieht die Lösung vor, dass die von der Visualisierungseinrichtung dargestellten Arbeitsvorgänge im Wesentlichen synchron zu realen in der Drehmaschine stattfindenden Arbeitsvorgängen darstellbar sind, damit die Bedienungsperson in der Lage ist, sämtliche unmittelbar im Arbeitsraum stattfindenden Arbeitsvorgänge zu beobachten.

Ergänzend hierzu sieht eine vorteilhafte Lösung vor, dass die von der Visualisierungseinrichtung dargestellten Arbeitsvorgänge zeitversetzt zu den realen in der Drehmaschine stattfindenden Arbeitsvorgängen staffelbar sind.

Eine derartige zeitversetzte Darstellung der Arbeitsvorgänge hat den Vorteil, dass sich einerseits bereits durchgeführte Arbeitsvorgänge im Nachhinein nochmals überprüfen lassen oder in einem Schadensfall die Vorgänge, die zum Schadensfall geführt haben, reproduzieren lassen.

Die zeitversetzte Darstellung von Arbeitsvorgängen erlaubt aber auch, später auf der Arbeitsmaschine durchzuführende reale Arbeitsvorgänge vorauseilend darzustellen, um zu überprüfen, ob diese kollisionsfrei in der Drehmaschine ablaufen können.

Zur Realisierung der zeitversetzten Darstellung der Arbeitsvorgänge sieht eine vorteilhafte Lösung vor, dass ein von der Visualisierungseinrichtung zeitversetzt dargestellter Arbeitsvorgang durch Speicherung von Bildinformationen in einer Bildinformationsspeichereinheit und nachfolgende Reproduktion derselben erfolgt.

Mit einer derartigen Bildinformationsspeichereinheit lassen sich in vorteilhafter Weise sämtliche auf der Visualisierungseinrichtung dargestellten Bildinformationen synchron zur Darstellung abspeichern und somit zeitversetzt, das heißt im Nachhinein, erneut darstellen.

Eine andere Möglichkeit der zeitversetzten Darstellung sieht vor, dass ein von der Visualisierungseinrichtung zeitversetzt dargestellter Arbeitsvorgang durch einen virtuellen Arbeitsvorgang, generiert durch vorauseilende Simulation eines realen Arbeitsvorgangs, darstellbar ist.

Die vorauseilende Simulation ermöglicht in vorteilhafter Weise zukünftig durchzuführende reale Arbeitsvorgänge im Vorgriff hinsichtlich möglicher Kollisions-Szenarien oder Schadensfälle zu überprüfen.

Hinsichtlich der Erzeugung der auf der Visualisierungseinrichtung darzustellenden Bildinformation wurden bislang keine näheren Angaben gemacht. So sieht eine vorteilhafte Lösung vor, dass in dem Arbeitsraum eine elektronische Bilderfassungseinrichtung vorgesehen ist und dass die von der Bilderfassungseinrichtung erfassten Bildinformationen auf der elektronischen Visualisierungseinrichtung darstellbar sind.

Die Bilderfassungseinrichtung kann dabei im einfachsten Fall eine Videokamera sein, es ist aber auch denkbar, mehrere Videokameras einzusetzen und aus den Bildern der mehreren Kameras komplexe, auf der elektronischen Visualisierungseinrichtung darzustellende Bildinformationen aufzubauen.

Hinsichtlich des optischen Spektralbereichs, in welchem die elektronische Bilderfassungseinrichtung arbeitet, wurden bislang keine näheren Angaben gemacht.

Eine Lösung sieht hierbei vor, dass die elektronische Bilderfassungseinrichtung im sichtbaren Spektralbereich arbeitet.

Da jedoch die Sichtverhältnisse durch Kühl-/Schmiermittel im Arbeitsraum im sichtbaren Spektralbereich beeinträchtigt sind, sieht eine weitere vorteilhafte Ausführungsform vor, dass alternativ oder ergänzend zum sichtbaren Spektralbereich die elektronische Bilderfassungseinrichtung im infraroten Spektralbereich arbeitet.

Das Erfassen von Bildinformationen im infraroten Spektralbereich hat den Vorteil, dass alle sich erwärmenden Teile im infraroten Spektralbereich gut erkennbar sind, das heißt insbesondere beispielsweise von den Bearbeitungseinheiten gehaltene Werkzeuge und Werkstücke oder auch Bearbeitungseinheiten, die sich bei Durchführung der Arbeitsvorgänge erwärmen.

Hinsichtlich der Ausgestaltung der Bilderfassungseinrichtung ist vorzugsweise vorgesehen, dass diese mindestens einen elektronischen Bilderfassungschip aufweist.

Hinsichtlich der Darstellung der Bildinformation mittels der elektronischen Visualisierungseinrichtung wurden bislang keine näheren Angaben gemacht. Beispielsweise wäre es denkbar, die von den Bilderfassungseinrichtungen generierten elektronischen Bildinformationen unmittelbar durch die elektronische Visualisierungseinrichtung darzustellen.

Um jedoch zur optimalen Darstellung der Bildinformationen Bildaufbereitung durchführen zu können, ist vorzugsweise vorgesehen, dass die elektronische Visualisierungseinrichtung mit einer Visualisierungsprozessoreinheit zusammenwirkt, welche die Möglichkeit eröffnet, die Bildinformation optimal für die Darstellung auf der elektronischen Visualisierungseinrichtung aufzubereiten.

Die Visualisierungsprozessoreinheit kann jedoch nicht nur dazu eingesetzt werden, Bildinformationen der Bilderfassungseinrichtungen aufzubereiten. Vielmehr kann die elektronische Visualisierungsprozessoreinheit auch dazu eingesetzt werden, dass diese Simulationen von Arbeitsvorgängen durchführt und auf der Visualisierungseinrichtung darstellt.

Besonders günstig ist es, dann, wenn die Visualisierungsprozessoreinheit in der Lage ist, Relativbewegungen der Bearbeitungseinheiten zu simulieren.

Im Rahmen dieser Simulation kann die Visualisierungsprozessoreinheit so arbeiten, dass sie durch Simulation Relativbewegungen ermittelt und beispielsweise einmal aufgenommene Abbildungen der Arbeitseinheiten entsprechend der simulierten Relativbewegungen bewegt.

Die Erfindung sieht vor, dass die Visualisierungsprozessoreinheit Bewegungen von virtuellen Arbeitseinheiten der Drehmaschine auf der Visualisierungseinrichtung darstellt. Das heißt, dass die Visualisierungsprozessoreinheit keine tatsächlichen Abbildungen der Bearbeitungseinheiten auf der Visualisierungseinrichtung darstellt, sondern virtuell generierte Bilder der Arbeitseinheiten.

Eine derartige Darstellung virtueller Bearbeitungseinheiten ist beispielsweise dadurch möglich, dass die Visualisierungsprozessoreinheit den geometrischen Formen der realen Einheiten entsprechende virtuelle Bearbeitungseinheiten ermittelt und auf der Visualisierungseinrichtung darstellt.

Beispielsweise werden derartige virtuelle Bearbeitungseinheiten in einem Speicher gespeichert und die Visualisierungsprozessoreinheit ist in der Lage, je nach darzustellender Bearbeitungseinheit die gespeicherte geometrische Form der virtuellen Bearbeitungseinrichtung in dem Speicher aufzurufen und dann auf der Visualisierungseinrichtung darzustellen.

Die Simulation eines Arbeitsvorgangs kann in unterschiedlichster Art und Weise erfolgen. Beispielsweise könnte die Simulation durch Reproduzieren bereits abgespeicherter Bewegungsabläufe erfolgen.

Eine realistische Simulation ist insbesondere jedoch dann möglich, wenn die Visualisierungsprozessoreinheit ein Arbeitsprogramm realer Arbeitsvorgänge zur Simulation derselben und Darstellung eines virtuellen Arbeitsvorgangs mit virtuellen Bearbeitungseinheiten heranzieht.

Ein derartiges Arbeitsprogramm ist dabei im einfachsten Fall ein auf der Maschinensteuerung laufendes Arbeitsprogramm, so dass beispielsweise zur Simulation das auf der Maschinensteuerung laufende Arbeitsprogramm ebenfalls auf der Visualisierungsprozessoreinheit laufen kann und lediglich der Ablauf der beiden Arbeitsprogramme zueinander zumindest von Zeit zu Zeit synchronisiert werden muss.

Gemäß der Erfindung stellt die Visualisierungsprozessoreinheit einen von der Maschinensteuerung aufgrund eines aktuell laufenden realen Arbeitsprogramms durchgeführten realen Arbeitsvorgang durch virtuelle Bearbeitungseinheiten und Simulation von deren Bewegungen auf der Visualisierungseinrichtung als virtuellen Arbeitsvorgang dar.

Um den simulierten Arbeitsvorgang möglichst realistisch darstellen zu können, ist vorgesehen, dass die Visualisierungsprozessoreinheit den simulierten Arbeitsvorgang zeitsynchron mit dem tatsächlichen, in der Drehmaschine ablaufenden realen Arbeitsvorgang darstellt.

Eine derartige zeitsynchrone Darstellung ist besonders günstig dann mit der Visualisierungsprozessoreinheit realisierbar, wenn die Maschinensteuerung die für die realen Bearbeitungseinheiten der Drehmaschine ermittelten Größen parallel zur ihrer Ermittlung der Visualisierungsprozessoreinheit übermittelt.

In diesem Fall ist es somit nicht notwendig, dass die Visualisierungsprozessoreinheit selbst ein Arbeitsprogramm, beispielsweise das Arbeitsprogramm der Maschinensteuerung, parallel zur Maschinensteuerung abarbeitet, sondern die Visualisierungsprozessoreinheit kann sich bei ihrer Simulation bereits an Größen orientieren, die von der Maschinensteuerung entsprechend dem Arbeitsprogramm generiert worden sind.

So ist vorzugsweise vorgesehen, dass die Maschinensteuerung Positionswerte der realen Arbeitseinheiten der Visualisierungsprozessoreinheit übermittelt, so dass die Visualisierungsprozessoreinheit nicht mehr die Positionswerte selbst generieren muss, sondern bereits die von der Maschinensteuerung ermittelten Positionswerte übernehmen kann, und folglich der bei der Visualisierungsprozessoreinheit anfallende Rechenaufwand erheblich reduziert ist.

Bei einer Ausführungsform kann dabei die Visualisierungsprozessoreinheit die virtuellen Bearbeitungseinheiten entsprechend den Positionswerten der realen Bearbeitungseinheiten relativ zueinander darstellen.

Die Positionswerte, die der Visualisierungsprozessoreinheit von der Maschinensteuerung übermittelt werden, können dabei in einem Fall Sollpositionswerte der realen Bearbeitungseinheiten sein, das heißt, dass in diesem Fall die Maschinensteuerung die aus dem Arbeitsprogramm abgeleiteten Sollpositionswerte parallel zum Bewegen der realen Bearbeitungseinheiten der Visualisierungsprozessoreinheit übermittelt.

Bei der Ermittlung von Sollpositionswerten erfolgen allerdings die Bewegungen der virtuellen Bearbeitungseinheiten entsprechend den von dem Arbeitsprogramm vorgegebenen Positionen und die Bedienungsperson ist nicht in der Lage zu erkennen, wenn nennenswerte Abweichungen von den Sollwerten, beispielsweise durch Störungen im Ablauf, einen Maschinenschaden oder andere Probleme, auftreten.

Aus diesem Grund ist alternativ oder ergänzend zum Übermitteln der Sollpositionswerte vorgesehen, dass die Maschinensteuerung erfasste Istwerte der Positionen der Bewegungsachsen der realen Arbeitseinheiten an die Visualisierungsprozessoreinheit zur Darstellung übermittelt.

Derartige Istwerte können im einfachsten Fall Istpositionswerte der Bewegungsachsen von mindestens einer der Bearbeitungseinheiten sein.

Insbesondere ist vorgesehen, dass die Istpositionswerte mindestens eine Position mindestens einer der Bearbeitungseinheiten längs mindestens einer der jeweiligen Bewegungsachsen repräsentieren.

Die der Visualisierungsprozessoreinheit übermittelten Istwerte müssen jedoch nicht zwingend Positionswerte sein.

Es ist auch denkbar, dass die Istwerte Istzustandswerte für mindestens eine der Größen wie Kraft oder Gegenkraft auf eine Bearbeitungseinheit, Temperatur einer Bearbeitungseinheit, Kraft oder Gegenkraft auf ein Werkzeug oder Werkstücke und Temperatur eines Werkzeugs oder Werkstücke sind.

Alternativ oder ergänzend dazu ist es ebenfalls denkbar, wenn die Istwerte die Iststatuswerte von Maschinenelementen sind.

Beispielsweise können derartige Iststatuswerte mindestens eine Statusinformation aus Statusinformationen wie "Zylinder vor", "Werkstück gespannt", "Werkzeug gespannt" sein.

Mit der Ermittlung und Übermittlung derartiger Istwerte an die Visualisierungsprozessoreinheit besteht die Möglichkeit, die Bedienungsperson noch umfassender zu informieren, als dies bei lediglich grafischer Darstellung des Arbeitsvorgangs hinsichtlich der jeweiligen Bewegungen der Bearbeitungseinheiten möglich ist.

Insbesondere ist dabei vorgesehen, dass die Visualisierungsprozessoreinheit die Istwerte grafisch darstellt.

Vorzugsweise ist hierzu vorgesehen, dass die Visualisierungsprozessoreinheit die Istwerte durch in einem Speicher abgespeicherte grafische Elemente darstellt.

Die in dem Speicher abgespeicherten grafischen Elemente können beispielsweise geometrische Konfigurationen der virtuellen Bearbeitungseinheiten sein.

Insbesondere ist in diesem Fall vorgesehen, dass die Visualisierungsprozessoreinheit die virtuellen Bearbeitungseinheiten entsprechend Istpositionswerten der korrespondierenden realen Bearbeitungseinheiten grafisch darstellt.

Um jedoch auch noch weitere Istwerte grafisch darstellen zu können, ist vorgesehen, dass die abgespeicherten grafischen Elemente Zustandssymbole für Zustandsinformationen, wie Kräfte oder Temperaturen, umfassen.

Derartige Zustandssymbole können beispielsweise bekannte optische Warnsymbole, wie Dreiecke oder Vielecke etc. sein. Es ist aber auch denkbar, wenn derartige Zustandssymbole Kolorierungen von virtuellen Bearbeitungseinheiten umfassen.

Hinsichtlich der Darstellung der Arbeitsvorgänge mit der Visualisierungsprozessoreinheit wurden bislang keine näheren Angaben gemacht. So sieht eine vorteilhafte Lösung vor, dass mit der Visualisierungsprozessoreinheit ein Arbeitsvorgang in mehreren Darstellungsmodi darstellbar ist.

Die Darstellungsmodi können unterschiedlicher Art sein. Ein Darstellungsmodus sieht vor, dass dieser die Darstellung des durch die Bilderfassungseinrichtung erfassten Arbeitsvorgangs ist.

Dabei kann dieser Darstellungsmodus die Darstellung des durch die im sichtbaren Spektralbereich arbeitende Bilderfassungseinrichtung erfassten Arbeitsvorgangs sein und ein anderer Darstellungsmodus kann die Darstellung des durch die im infraroten Spektralbereich arbeitende Bilderfassungseinrichtung erfassten Arbeitsvorgangs sein.

Ein anderer Darstellungsmodus sieht vor, dass dieser die Darstellung eines simulierten Arbeitsvorgangs ist.

Dabei kann dieser simulierte Arbeitsvorgang entweder mit realen Abbildungen von Bearbeitungseinheiten oder virtuellen Bearbeitungseinheiten dargestellt werden.

Außerdem kann die Simulation mit Sollwerten oder mit Istwerten erfolgen.

Es besteht entweder die Möglichkeit, mittels der Visualisierungsprozessoreinheit aus den verschiedenen Darstellungsmodi einen Darstellungsmodus auszuwählen.

Es besteht aber auch die Möglichkeit, mittels der Visualisierungsprozessoreinheit mehrere Darstellungsmodi gleichzeitig darzustellen.

In diesem Fall könnten die mehreren Darstellungsmodi nebeneinanderliegend auf der Visualisierungseinrichtung dargestellt werden.

Besonders günstig ist es jedoch, wenn die verschiedenen Darstellungsmodi durch übereinanderliegende Darstellungen darstellbar sind.

In diesem Fall ist vorgesehen, dass die verschiedenen Darstellungsmodi durch verschiedene übereinanderliegend dargestellte Darstellungsarten gleichzeitig auf der Visualisierungseinrichtung darstellbar sind.

So ist es zweckmäßig, dass eine Darstellungsart eine teiltransparente Darstellungsart ist.

Ferner ist vorgesehen, dass eine Darstellungsart eine Darstellung durch Umrisslinien ist.

Eine andere Darstellungsart sieht vor, dass diese eine Darstellung durch ein Vollbild, insbesondere ein farbunterlegtes Vollbild ist.

Hinsichtlich der Bedienung der Visualisierungseinrichtung wurden bislang keine näheren Angaben gemacht. So sieht eine vorteilhafte Lösung vor, dass der Visualisierungseinrichtung ein Bedienfeld zugeordnet ist.

Ein derartiges Bedienfeld kann vorzugsweise dazu eingesetzt werden, dass mit diesem eine Auswahl von Darstellungsmodus und/oder Darstellungsart durchführbar ist.

Zweckmäßigerweise lässt sich ein derartiges Bedienfeld in die Visualisierungseinrichtung integrieren, so dass damit in einfacher Art und Weise die Darstellung des Arbeitsvorgangs und die Auswahl der Art der Darstellung für eine Bedienungsperson zusammengefasst sind.

Eine besonders günstige Lösung sieht vor, wenn das Bedienfeld als Touchscreen in die Visualisierungseinrichtung integriert ist, da damit insbesondere hinsichtlich der Umgebungsbedienungen von Drehmaschinen eine einfache und sichere Bedienung mit hohem Komfort realisiert werden kann.

Um die Bedienbarkeit des Bedienfelds an die persönlichen ergonomischen Bedürfnisse der Bedienungsperson anpassen zu können, ist vorzugsweise vorgesehen, dass Bereiche des Touchscreens durch Bediensoftware funktionsdefinierbar sind, das heißt, dass die den einzelnen Bereichen zugeordneten Funktionen entsprechend den Wünschen oder Anforderungen der Bedienungsperson definiert und festgelegt werden können.

Bei Verwendung eines Touchscreens als Bedienfeld besteht die Möglichkeit, den Touchscreen so auszubilden, dass Bereiche des Touchscreens durch Bediensoftware funktionsdefinierbar sind.

Diese Lösung eröffnet beispielsweise die Möglichkeit, einzelne Bereich des Touchscreens zu aktivieren oder zu deaktivieren, so dass die aktivierten Bereiche des Touchscreens durch die Funktionsdefinition als Ganzes aktivierbar oder deaktivierbar sind. Somit ist je nach Software beispielsweise der jeweils ergonomisch günstigste Bereich des Touchscreens als solcher aktiviert und andere Bereiche sind deaktiviert.

Darüber hinaus ist es im Rahmen des erfindungsgemäß angeordneten Bedienfeldes günstig, wenn einzelne Bedienelemente des Bedienfeldes funktionsionsdefinierbar sind. Das heißt, dass einzelnen Bedienelementen des Bedienfeldes jeweils die Funktionen zugeordnet werden können, die eine ergonomisch günstige Bedienung erlauben.

Besonders günstig ist es, wenn Bedienelemente des Bedienfeldes für Rechtshänder ergonomisch günstig funktionsdefinierbar sind oder die Bedienelemente des Bedienfeldes für Linkshänder ergonomisch günstig funktionsdefinierbar sind, so dass das Bedienfeld als Ganzes ergonomisch an die Gegebenheiten der Bedienungsperson angepasst werden kann.

Hinsichtlich der spezifischen Anordnung der Visualisierungseinrichtung nahe einer Zugangsöffnung des Arbeitsraums wurden bislang keine spezifischen Angaben gemacht.

So ist es für eine Bedienungsperson, insbesondere für das Einrichten der Drehmaschine oder das Testen von Arbeitsvorgängen besonders günstig, wenn die Visualisierungseinrichtung an einer die Zugangsöffnung verschließenden Tür der Maschinenverhaubung angeordnet ist.

Beispielsweise wäre es in diesem Fall möglich, dass die Visualisierungseinrichtung neben einem in der Tür vorgesehenen Sichtfenster angeordnet ist.

Noch günstiger aus Sicherheitsgesichtspunkten ist es jedoch, wenn die Visualisierungseinrichtung anstelle eines Sichtfensters an der Tür vorgesehen ist.

Darüber hinaus ist es ebenfalls günstig, wenn das Bedienfeld an der Tür vorgesehen ist.

Prinzipiell wäre es möglich, die Tür als Schwenktür auszubilden.

Besonders günstig ist es jedoch, wenn die Tür der Maschinenverhaubung als Schiebetür ausgebildet ist.

Dabei ist zweckmäßigerweise die Tür so ausgebildet, dass diese in ihrer die Zugangsöffnung zum Arbeitsraum freigebenden Öffnungsstellung in einer Verschieberichtung auf einer Seite der Zugangsöffnung angeordnet ist.

Um sowohl Rechts- wie auch Linkshänder eine ergonomisch günstige Benutzung der Visualisierungseinrichtung an der Tür der Maschinenverhaubung zu ermöglichen, ist vorzugsweise vorgesehen, dass die Tür in ihrer Öffnungsstellung beiderseits der Zugangsöffnung positionierbar ist.

Ferner ist vorzugsweise die Visualisierungseinrichtung so ausgebildet, dass sie die Funktionsdaten der Maschinensteuerung anzeigt.

Hierzu ist die Visualisierungseinrichtung zweckmäßigerweise mit einem Anzeigefeld für Informationen der Maschinensteuerung versehen.

Um neben der Anzeige von Funktionsdaten der Bedienungsperson in der bereits beschriebenen Art und Weise die Beobachtung des Arbeitsvorgangs zu erlauben, ist vorzugsweise vorgesehen, dass die Visualisierungseinrichtung zwischen einer Funktionsdatenanzeige der Maschinensteuerung und einer Darstellung mindestens eines visuellen oder realen Arbeitsvorgangs umschaltbar ist.

Um auch hier einer Bedienungsperson optimale Nutzungsmöglichkeiten zu gestatten, ist vorzugsweise vorgesehen, dass ein Anzeigefeld für die Funktionsdatenanzeige der Maschinensteuerung frei auf einer Schirmfläche der Visualisierungseinrichtung positionierbar ist.

Darüber hinaus ist es günstig, wenn ein Anzeigefeld für ein Maschinenbild frei auf der Schirmfläche der Visualisierungseinrichtung positionierbar ist.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine schematische Frontansicht einer Drehmaschine mit Blick in eine Arbeitsraum bei geöffneter Tür einer Maschinenverhaubung;
- Fig. 2: eine Ansicht entsprechend Fig. 1 bei geschlossener Tür der Maschinenverhaubung;
- Fig. 3: eine schematische Darstellung einer Konfiguration von Maschinensteuerung und Visualisierungseinrichtung;
- Fig. 4: eine schematische Darstellung ähnlich Fig. 1 eines zweiten Beispiels einer Drehmaschine;
- Fig. 5: eine schematische Darstellung der Konfiguration der Maschinensteuerung und der Visualisierungseinrichtung bei dem zweiten Ausführungsbeispiel;
- Fig. 6: eine schematische Darstellung ähnlich Fig. 3 eines dritten Beispiels einer erfindungsgemäßen Drehmaschine;
- Fig. 7: eine schematische Darstellung ähnlich Fig. 3 eines vierten Beispiels der erfindungsgemäßen Drehmaschine;
- Fig. 8: eine schematische Darstellung ähnlich Fig. 3 eines fünften Beispiels der erfindungsgemäßen Drehmaschine;
- Fig. 9: eine schematische Darstellung ähnlich Fig. 2 eines sechsten Beispiels einer erfindungsgemäßen Drehmaschine.

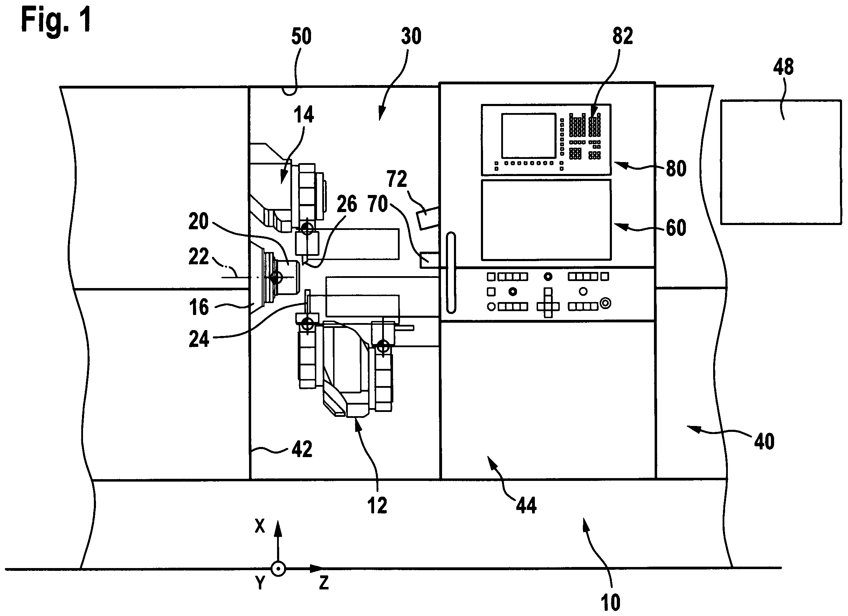

Ein in Fig. 1 dargestelltes erstes Ausführungsbeispiel einer erfindungsgemäßen, als Werkzeugmaschine ausgebildeten Drehmaschine umfasst, wie in Fig. 1 dargestellt, ein Maschinengestell 10, an welchem beispielsweise als erste Bearbeitungseinheiten ein erster 12 und ein zweiter Werkzeugträger 14 angeordnet sind.

Ferner ist an dem Maschinengestell 10 als zweite Arbeitseinheit ein Werkstückträger 16 vorgesehen, welcher beispielsweise in Form einer Arbeitsspindel einer Drehmaschine ausgebildet ist, welche ein als Ganzes mit 20 bezeichnetes Werkstück aufnehmen und um eine Spindelachse 22 rotierend antreiben kann.

Die erste Bearbeitungseinheiten darstellenden Werkzeugträger 12 und 14 und der eine zweite Bearbeitungseinheit darstellende Werkstückträger 16 sind relativ zueinander bewegbar an dem Maschinengestell 10 angeordnet, um beispielsweise einzelne Werkzeuge 24, 26 derselben an dem Werkstück 20 zur Bearbeitung desselben einsetzen zu können.

Dabei sind sowohl der Werkstückträger 16 mit dem Werkstück 20 als auch die Werkzeugträger 12 und 14 mit den dazugehörigen Werkzeugen 24 und 26 in einem Arbeitsraum 30 der Drehmaschine angeordnet, wobei sich beispielsweise auch der Werkstückträger 16 teilweise außerhalb des Arbeitsraums 30 erstrecken kann.

Sämtliche Aggregate der Drehmaschine sowie auch der Arbeitsraum 30 sind von einer als Ganzes mit 40 bezeichneten Maschinenverhaubung umschlossen, die im Bereich des Arbeitsraums 30 eine Zugangsöffnung 42 aufweist, über welche der Arbeitsraum 30 zugänglich ist.

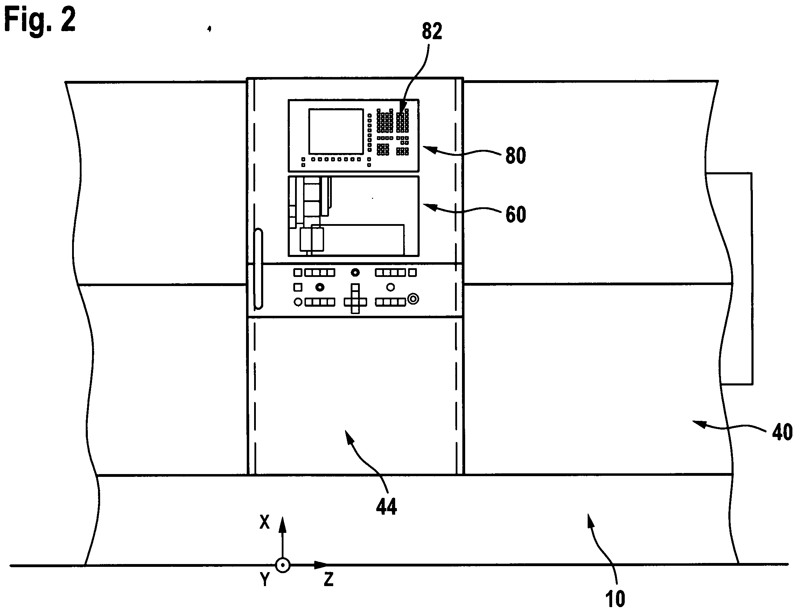

Die Zugangsöffnung 42 ist durch eine als Ganzes mit 44 bezeichnete Schiebehaube verschließbar, welche relativ zur Maschinenverhaubung 40 von einer die Zugangsöffnung 42 freigebenden Stellung, dargestellt in Fig. 1, in eine in Fig. 2 dargestellte, die Zugangsöffnung 42 verschließende Stellung relativ zur Maschinenverhaubung 40 verschiebbar ist.

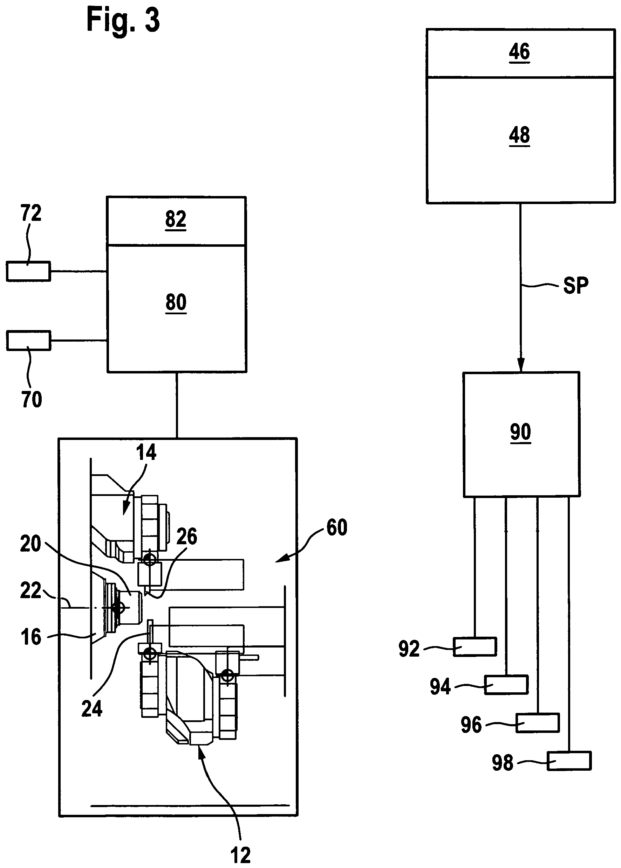

Sämtliche Operationen im Arbeitsraum 30 und insbesondere auch die Bewegungen der Bearbeitungseinheiten 12 und 14 sowie 16 werden durch eine Maschinensteuerung 48 gesteuert, die ein den Arbeitsvorgang festlegendes und vorher in einem Speicher derselben abgespeichertes Arbeitsprogramm 46 abarbeitet (Fig. 3).

Zum Schutz einer Bedienungsperson gegen sich im Arbeitsraum 30 lösende Teile, beispielsweise Teile der Werkzeuge 24, 26, der Werkzeugträger 12 oder 14, des Werkstücks 20 oder auch des Werkstückträgers 16 ist die als Ganzes mit 40 bezeichnete Maschinenverhaubung mit ihren den Arbeitsraum 30 umschließenden Wänden 50 und die ebenfalls eine Wand des Arbeitsraums 30 darstellende Schiebehaube 44 aus einem eine definierte maximale Masse mit einer definierten maximalen Geschwindigkeit abfangenden Material ausgebildet, so dass ausreichende Unfallsicherheit für die Bedienungsperson gewährleistet ist.

Die Sicherheitsstufe, der dieses Material entsprechen muss, ist durch eine "Beschussklasse" definiert, deren Anforderungen in der EU-Norm DIN EN 12415 niedergelegt sind.

Bei den bekannten Lösungen ist die Schiebehaube 44 mit einem Sichtfenster versehen, welches einer Bedienungsperson einen Einblick in den Arbeitsraum 30 bei laufender Maschine ermöglicht.

Ein derartiges Sichtfenster ist problematisch im Hinblick auf eine ausreichende Sicherheit gegen mögliche umherfliegende Massen, so dass ein ausreichender Schutz für eine durch ein derartiges Sichtfenster blickende Bedienungsperson mit hohem technischem Aufwand realisiert werden muss.

Aus diesem Grund ist der Drehmaschine erfindungsgemäß eine als Ganzes mit 60 bezeichnete elektronische Visualisierungseinrichtung zugeordnet, welche es der Bedienungsperson erlaubt, sich in einer sicheren Umgebung aufzuhalten und über die elektronische Visualisierungseinrichtung 60 im Arbeitsraum 30 ablaufende Arbeitsvorgänge zu beobachten.

Bei dem in Fig. 1 und 2 dargestellten ersten Beispiel der Drehmaschine ist dabei die elektronische Visualisierungseinrichtung 60 nach wie vor an der Schiebehaube 44 angeordnet, jedoch an dieser anstelle eines bislang üblichen Sichtfensters, so dass durch Entfallen des sicherheitskritischen Sichtfensters die Schiebehaube 44 fensterlos und somit sicherer ausgebildet sein kann.

Es besteht aber auch die Möglichkeit, die elektronische Visualisierungseinrichtung 60 an einer anderen Stelle der Maschinenverhaubung 40 oder am Maschinengestell 10 direkt oder mittels eines Trägers oder eines Arms anzuordnen, beispielsweise an einer Stelle, die einen größeren Abstand von der Schiebehaube 44 aufweist, so dass die Schiebehaube 44 nach wie vor mit einem Sichtfenster versehen werden kann, die Beobachtung des Arbeitsvorgangs jedoch nicht über das Sichtfenster erfolgen muss, sondern in der gesicherten Umgebung erfolgen kann, in welcher die elektronische Visualisierungseinrichtung 60 angeordnet ist.

Das erste Beispiel der Drehmaschine sieht hierzu vor, dass in dem Arbeitsraum 30 Kameras 70, 72 angeordnet sind, die es erlauben, den Arbeitsvorgang im Arbeitsraum 30 zu erfassen und in Form elektronischer Bildinformationen einer Visualisierungsprozessoreinheit 80 zu übermitteln, welche aus diesen elektronischen Bildinformationen Steuerinformationen für die Visualisierungseinrichtung 60 generiert, um auf dieser ein von den Kameras 70, 72 aufgenommenes Bild der Bearbeitungseinheiten 12, 14, 16 wiederzugeben (Fig. 3).

Im einfachsten Fall handelt es sich bei den Kameras 70, 72 um im sichtbaren Spektralbereich arbeitende Videokameras, deren elektronische Bildinformation von der Visualisierungsprozessoreinheit 80 derart verarbeitet wird, dass auf der elektronischen Visualisierungseinrichtung 60 die Aktionen der ersten Bearbeitungseinheiten 12 und 14, der diesen zugeordneten Werkzeuge 24 und 26 sowie alle Aktionen der zweiten Bearbeitungseinheit 16 und des in dieser gehaltenen Werkstücks 20 darstellbar sind.

Bei einer Variante des ersten Ausführungsbeispiels ist entweder eine der Kameras 70, 72 oder es sind beide Kameras 70, 72 als Infrarotkameras ausgebildet, welche somit die Verhältnisse im Arbeitsraum 30 in einem anderen Spektralbereich erfassen, so dass dadurch die Möglichkeit eröffnet wird, alternativ oder zusätzlich zur Bilderfassung im sichtbaren Spektralbereich die Verhältnisse im infraroten Spektralbereich zu erfassen und somit beispielsweise den Späneflug oder die Bewegung des sich erwärmenden Werkstücks 20 oder der sich erwärmenden Werkzeuge 24 und 26 besser zu erkennen, insbesondere angesichts der Tatsache, dass im Arbeitsraum 30 verspritzter oder versprühter Kühl-/Schmierstoff im sichtbaren Spektralbereich zu erheblichen Sichtbehinderungen führen kann.

Beispielsweise besteht somit bei der Variante des ersten Ausführungsbeispiels die Möglichkeit, einerseits die Bearbeitungseinheiten 12, 14, 16 mit dem Werkstück 20 und den Werkzeugen 24 und 26 im sichtbaren Spektralbereich zu erfassen und auf der elektronischen Visualisierungseinrichtung 60 darzustellen, gleichzeitig aber auch die vorstehend beschriebenen Arbeitseinheiten 12, 14, 16 mit dem Werkstück 20 und den Werkzeugen 24 und 26 im infraroten Spektralbereich zu erfassen und die im infraroten Spektralbereich erfasste Bildinformation gleichzeitig und beispielsweise sogar nebeneinander oder übereinanderliegend zu der Bildinformation aus dem sichtbaren Spektralbereich auf der elektronischen Visualisierungseinrichtung 60 darzustellen, so dass eine Bedienungsperson gegenüber bekannten Lösungen verbesserte Bildinformation betreffend die Vorgänge im Arbeitsraum 30 erhält und somit den im Arbeitsraum 30 ablaufenden Arbeitsvorgang besser beurteilen kann.

Zur Steuerung der einzelnen Optionen ist hierzu die Visualisierungsprozessoreinheit 80 mit einem Eingabefeld 82 versehen, welches es erlaubt, die gewünschten Bildinformationen, das heißt Bildinformationen im sichtbaren oder beispielsweise infraroten Spektralbereich, auszuwählen und auch die Darstellungsart auszuwählen, nämlich dahingehend, ob diese Bildinformationen nebeneinander oder übereinanderliegend dargestellt werden, um den Arbeitsvorgang auf der elektronischen Visualisierungseinrichtung 60 optimal beobachten zu können.

Die Maschinensteuerung 48 arbeitet bei dem ersten Beispiel wie eine konventionelle bekannte Maschinensteuerung, die mit Sollpositionswerten SP eine Antriebseinrichtung 90 ansteuert, welcher ihrerseits Antriebsmotoren oder Aktoren 92, 94, 96, 98 zum Bewegen der Bearbeitungseinheiten in Richtung jeweils einer der Bewegungsachsen X, Y, Z betreibt (Fig. 3).

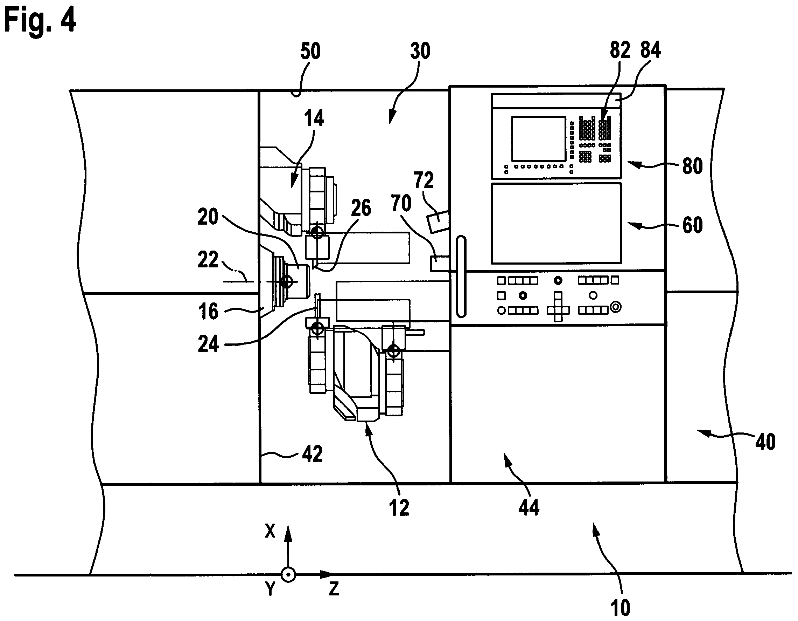

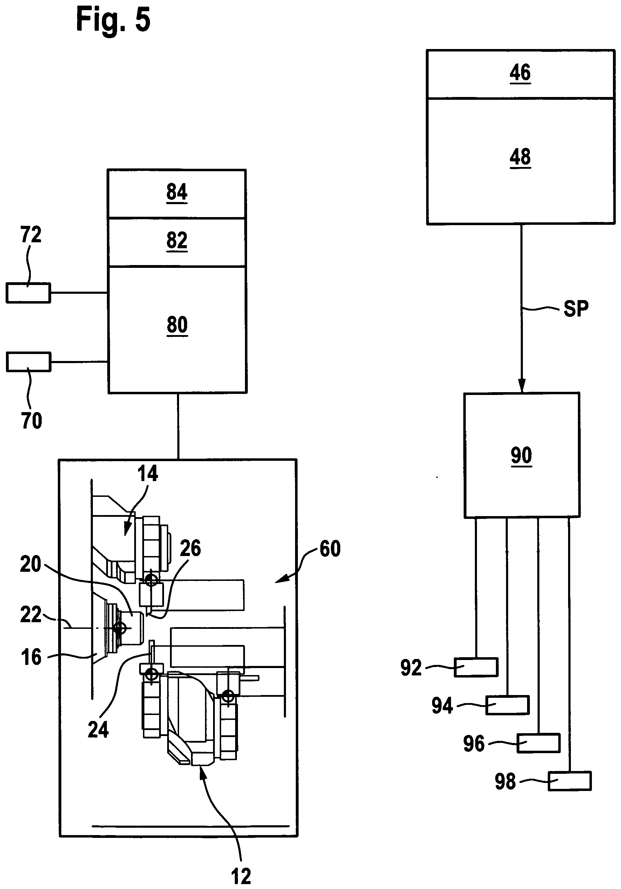

Bei einem zweiten Beispiel einer Drehmaschine, dargestellt in Fig. 4 und 5, ist die Visualisierungsprozessoreinheit 80 noch mit einer Bildinformationsspeichereinheit 84 versehen, um die auf der elektronischen Visualisierungseinrichtung 60 dargestellte Bildinformation parallel zur Darstellung abzuspeichern, so dass die Möglichkeit besteht, beispielsweise bei einem im Arbeitsraum 30 stattfindenden Kollisionsfall, die zur Kollision führenden Bewegungen zu reproduzieren und beispielsweise in Zeitlupe darzustellen, indem die Bildinformationen aus der Bildinformationsspeichereinheit 84 zur Darstellung auf der elektronischen Bilderfassungseinheit ausgelesen werden, so dass sich für einen definierbaren zurückliegenden Zeitraum sämtliche auf der elektronischen Visualisierungseinrichtung 60 dargestellten Bildinformationen und gegebenenfalls auch auf dieser nicht dargestellte Bildinformationen erneut aufrufen lassen und sich dadurch die Ursache für die Kollision im Arbeitsraum 30 rückblickend ermitteln lässt.

Hinsichtlich der übrigen Merkmale des zweiten Beispiels werden dieselben Bezugszeichen verwendet wie beim ersten Ausführungsbeispiel, so dass diesbezüglich vollinhaltlich auf die Ausführungen zum ersten Ausführungsbeispiel Bezug genommen wird.

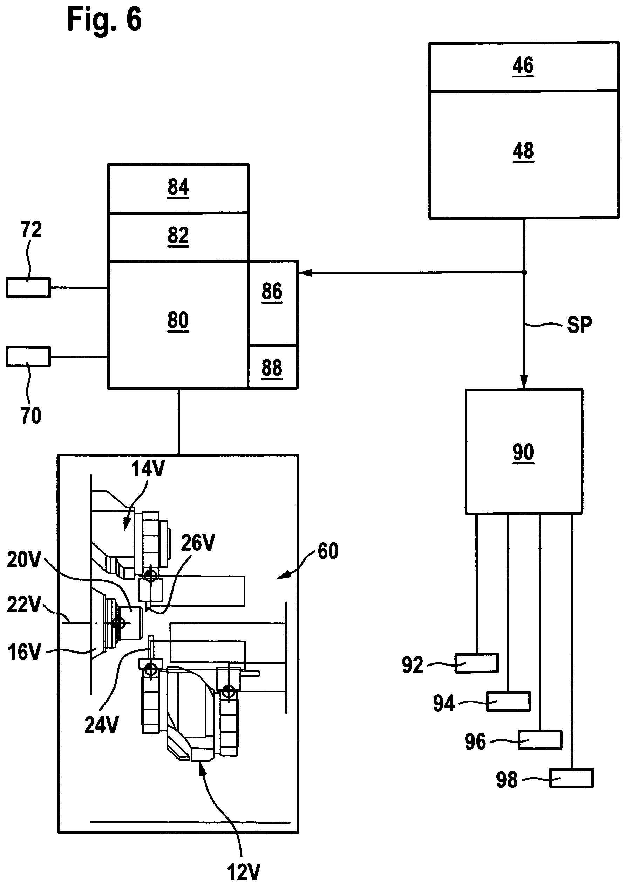

Bei einem dritten Ausführungsbeispiel, dargestellt in Fig. 6, ist die Visualisierungsprozessoreinheit 80 mit einer Simulationsprozessoreinheit 86 versehen, welche Steuerungsinformationen von der Maschinensteuerung 48 zu einem tatsächlich im Arbeitsraum 30 ablaufenden Arbeitsvorgang erhält.

Beispielsweise ist das dritte Ausführungsbeispiel so aufgebaut, dass die Maschinensteuerung 48 der Antriebseinrichtung 90 die zum Antreiben der Antriebsmotoren oder Aktoren 92, 94, 96, 98 zum Bewegen der Bearbeitungseinheiten 12, 14, 16 erforderlichen Sollpositionswerte SP übermittelt und diese Sollpositionswerte SP auch gleichzeitig der Simulationsprozessoreinheit 86 übermittelt.

Die Simulationsprozessoreinheit 86 generiert nun aufgrund von in einem Speicher 88 abgelegten geometrischen Konfigurationen virtueller Bearbeitungseinheiten, die den realen Bearbeitungseinheiten 12, 14, 16, in ihrer geometrischen Form und Abmessung im Wesentlichen entsprechen, virtuelle Bearbeitungseinheiten 12V, 14V und 16V mit virtuellen Werkzeugen 24V und 26V sowie einem virtuellen Werkstück 20V und stellt diese auf der elektronischen Visualisierungseinrichtung 60 dar.

Alle durch das Arbeitsprogramm 46 der Maschinensteuerung 48 durch die vorgegebenen Sollpositionswerte SP gesteuerten Bewegungen der realen Arbeitseinheiten 12, 14, 16 werden auf der elektronischen Visualisierungseinrichtung 60 durch Bewegungen der virtuellen Bearbeitungseinheiten 12V, 14V, 16V dadurch dargestellt, dass die Simulationsprozessoreinheit 86 einerseits die grafischen Darstellungen der virtuellen Bearbeitungseinheiten 12V, 14V, 16V aus dem Speicher 88 ausliest und auf der Visualisierungseinrichtung 60 darstellt und andererseits diese virtuellen Bearbeitungseinheiten 12V, 14V, 16V entsprechend den der Simulationsprozessoreinheit 86 übermittelten Sollpositionswerte SP relativ zueinander bewegt.

Da die Sollpositionswerte SP synchron sowohl der Antriebseinrichtung 90, als auch der Simulationsprozessoreinheit 86 übermittelt werden, erfolgt die Darstellung des von der Maschinensteuerung 48 gesteuerten realen Arbeitsvorgangs und des von der Simulationsprozessoreinheit 86 anhand der Sollpositionswerte SP auf der elektronischen Visualisierungseinrichtung 60 dargestellten simulierten Arbeitsvorgangs mit den virtuellen Bearbeitungseinheiten 12V, 14V, 16V im Wesentlichen synchron zueinander.

Hinsichtlich der weiteren Merkmale des dritten Ausführungsbeispiels wurden dieselben Bezugszeichen wie bei den voranstehenden Ausführungsbeispielen verwendet, so dass bezüglich der Beschreibung dieser Merkmale vollinhaltlich auf die Ausführungen zu diesen Ausführungsbeispielen Bezug genommen werden kann.

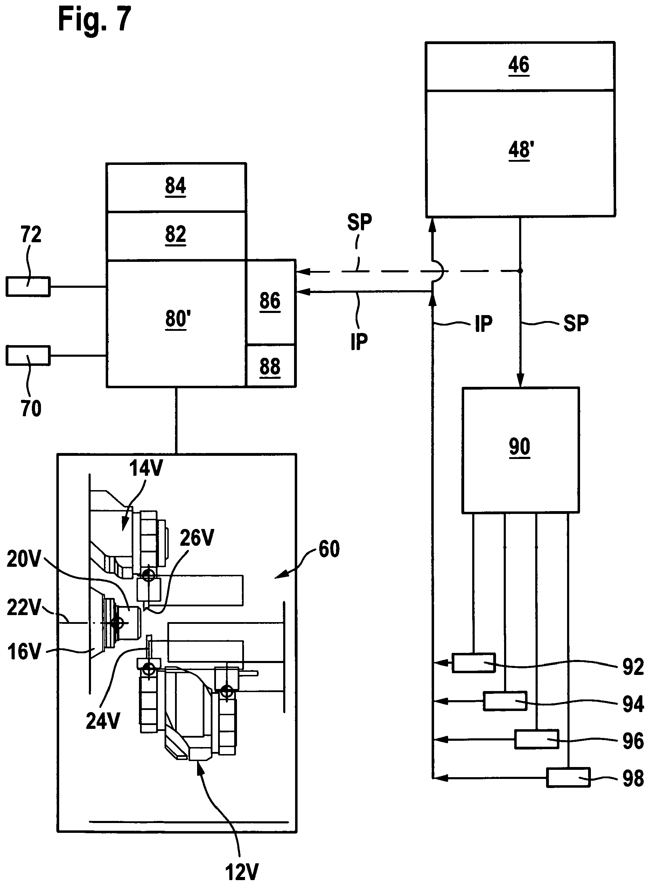

Bei einem vierten Ausführungsbeispiel einer erfindungsgemäßen Drehmaschine, dargestellt in Fig. 7 sind diejenigen Elemente, die mit denen der voranstehenden Ausführungsbeispielen identisch sind, mit denselben Bezugszeichen versehen, so dass hinsichtlich der Beschreibung derselben vollinhaltlich auf die Ausführungen zu den voranstehenden Ausführungsbeispielen Bezug genommen werden kann.

Im Gegensatz zum dritten Ausführungsbeispiel ist bei dem vierten Ausführungsbeispiel vorgesehen, dass die Maschinensteuerung 48' der Visualisierungsprozessoreinheit 80' nicht Sollpositionswerte SP zur Verfügung stellt, sondern Istpositionswerte IP, die von den einzelnen Antriebsmotoren oder Aktoren 92, 94, 96, 98 von der Maschinensteuerung 48' abgefragt werden.

Die Tatsache, dass nunmehr die Position der virtuellen Bearbeitungseinheiten 12V, 14V, 16V nicht mehr basierend auf den Sollpositionswerten SP simuliert wird, sondern basierend auf den Istpositionswerten IP, hat den Vorteil, dass damit der auf der elektronischen Visualisierungseinheit 60 dargestellte virtuelle Arbeitsvorgang exakt dem realen Arbeitsvorgang im Arbeitsraum 30 entspricht, da dem simulierten Arbeitsvorgang die tatsächlichen Istpositionen IP der Antriebsmotoren oder Aktoren 92, 94, 96, 98 zugrundeliegen und nicht von der Maschinensteuerung 48 vorgegebene Sollpositionen SP, die von den Istpositionen IP nennenswert abweichen können, wenn beispielsweise einer der Antriebsmotoren oder Aktoren 92, 94, 96, 98 einen Schaden aufweist, oder auch Bearbeitungseinheiten 12, 14, 16 aufgrund von Fehlern im Arbeitsprogramm kollidieren.

Somit hat bei dem vierten Ausführungsbeispiel die Bedienungsperson die Möglichkeit, anhand der Bewegungen der virtuellen Bearbeitungseinheiten 12V, 14V, 16V auf der elektronischen Visualisierungseinrichtung 60 exakt zu verfolgen, wie sich die entsprechenden Bearbeitungseinheiten , 12, 14, 16 im Arbeitsraum 30 tatsächlich bewegen.

Insbesondere hat die Bedienungsperson bei diesem Ausführungsbeispiel auch die Möglichkeit, beispielsweise im Fall von Beschädigungen oder Kollisionen unter Ausnutzung der in der Bildinformationsspeichereinheit 84 gespeicherten Bildinformation rückblickend die Bewegungen oder Zustände zu ermitteln, nach denen beispielsweise eine Kollisionssituation eingetreten ist, da der simulierte Arbeitsvorgang exakt dem realen Bearbeitungsvorgang mit allen gegebenenfalls im Arbeitsraum 30 aufgetretenen Positionierungsfehlern oder Defiziten entspricht.

Bei einer Variante des vierten Ausführungsbeispiels, ebenfalls dargestellt in Fig. 7, besteht gemäß der gestrichelten Linie auch noch die Möglichkeit, der Simulationsprozessoreinheit 86 nicht nur die Istpositionen IP zur Verfügung zu stellen, sondern gleichzeitig auch die Sollpositionen SP.

In diesem Fall kann die Simulationsprozessoreinheit 86 bei ausreichend großer Rechnerkapazität sowohl einen simulierten Bearbeitungsvorgang anhand der Istpositionen IP als auch einen simulierten Bearbeitungsvorgang anhand der Sollpositionen SP auf der elektronischen Visualisierungseinrichtung 60 darstellen und somit der Bedienungsperson die Chance eröffnen, festzustellen, wie die Abweichungen zwischen den Sollpositionen und den Istpositionen sind, was insbesondere ebenfalls im Fall einer Kollisionssituation oder eines Maschinenschadens weitere Aufschlüsse über das Zustandekommen desselben ermöglicht.

In diesem Fall lässt sich beispielsweise der simulierte Arbeitsvorgang aufgrund der Istpositionen IP in einem Vollbild auf der elektronischen Visualisierungseinrichtung 60 darstellen, während der aufgrund der Sollpositionen SP simulierte Arbeitsvorgang als Halbtransparentes Bild auf der elektronischen Visualisierungseinrichtung 60 dargestellt wird, so dass bei Übereinanderlegen der Darstellungsart "Vollbild" und der Darstellungsart "Halbtransparent" die Bedienungsperson unmittelbar die Differenzen zwischen Sollpositionen SP und Istpositionen IP erkennen kann.

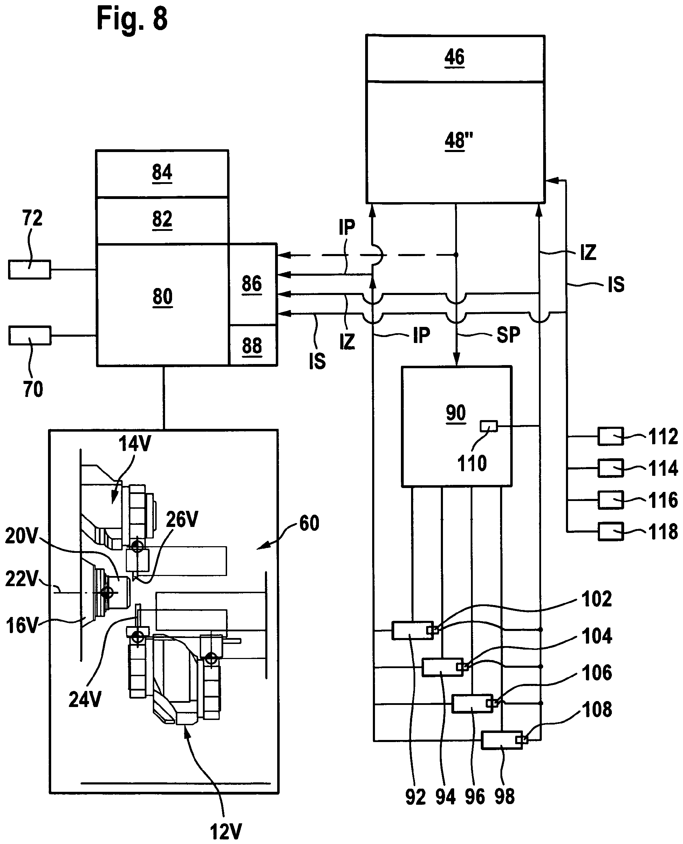

Bei einem fünften Ausführungsbeispiel, dargestellt in Fig. 8, sind diejenigen Elemente, die mit denen der voranstehenden Ausführungsbeispielen identisch sind, mit denselben Bezugszeichen versehen, so dass hinsichtlich der Beschreibung derselben vollinhaltlich auf die Ausführungen zu den voranstehenden Ausführungsbeispielen Bezug genommen werden kann.

Im Gegensatz zum vierten Ausführungsbeispiel werden von der Maschinensteuerung 48" im Zusammenhang mit dem Betrieb der Drehmaschine, insbesondere der Bearbeitungseinheiten 12, 14, 16 nicht nur Istpositionen IP der Antriebsmotoren oder Aktoren 92, 94, 96, 98 abgefragt, sondern zusätzlich noch Istzustandswerte IZ, die durch Zustandssensoren 102, 104, 106, 108 ermittelt werden, wobei diese Zustandssensoren 102, 104, 106, 108 beispielsweise Temperatursensoren sind, die entweder unmittelbar den Antriebsmotoren oder Aktoren 92, 94, 96, 98 zugeordnet sind oder beispielsweise auch den mit den Antriebsmotoren oder Aktoren 92, 94, 96, 98 bewegten Bearbeitungseinheiten 12, 14, 18 oder den entsprechend mit diesen Bearbeitungseinheiten 12, 14 bewegten Werkzeugen 24, 26, so dass die Maschinensteuerung 48" die Möglichkeit hat, beispielsweise thermische Überhitzungszustände zu erfassen und gegebenenfalls entsprechende Warnhinweise zu geben.

Bei diesem Ausführungsbeispiel werden auch diese Istzustandswerte IZ der Simulationsprozessoreinheit 86 übermittelt und die Simulationsprozessoreinheit 86 wählt entsprechend den jeweiligen Istzustandswerte IZ aus dem Speicher 88 grafische Symbole aus, die im Zusammenhang mit der jeweiligen virtuellen Bearbeitungseinheit 12V, 14V; 16V oder dem jeweiligen virtuellen Werkzeug 24V, 26V oder auch dem Werkstück 20V dargestellt werden. Derartige Symbole können beispielsweise Warnsymbole sein oder Kolorierungen der jeweils dargestellten virtuellen Bearbeitungseinheiten 12V, 14V; 16V oder der jeweils dargestellten virtuellen Werkzeuge 24V, 26V oder des jeweils dargestellten virtuellen Werkstücks 20V.

Somit kann beispielsweise eine grüne Farbunterlegung der entsprechenden Bearbeitungseinheit 12V, 14V, 16V oder des jeweiligen virtuellen Werkzeugs 24V, 26V oder des Werkstücks 20V eine zulässige Temperatur bedeuten, während eine gelbe oder sogar eine rote Farbunterlegung der entsprechenden Bearbeitungseinheit 12V, 14V, 16V oder des entsprechenden Werkzeugs 24V, 26V oder des Werkstücks 20V eine Erhitzung bzw. Überhitzung signalisiert.

In gleicher Weise kann über einen Zustandssensor 110, der der Antriebseinrichtung 90 zugeordnet ist, zum Beispiel aufgrund einer Strommessung, die auf den jeweiligen Antriebsmotor oder Aktor 92, 94, 96, 98 wirkende Gegenkraft ermittelt werden, die ebenfalls einen für die Maschinensteuerung 48" im Hinblick auf die Präzision oder die Sicherheit relevanten Istzustandswert IZ darstellt. Wird dieser Istzustandswert IZ der Simulationsprozessoreinheit 86 übermittelt, so kann die Simulationsprozessoreinheit 86 ebenfalls durch grafische Elemente aus dem Speicher 88 für eine Bedienungsperson grafisch anzeigen, wenn diese Kraft beispielsweise ein zulässiges Maß überschreitet, wobei dies ebenfalls durch beliebige grafische Elemente oder Farbunterlegung der entsprechenden virtuellen Bearbeitungseinheit 12V, 14V, 16V erfolgen kann.

Darüber hinaus ist bei diesem Ausführungsbeispiel vorgesehen, dass die Maschinensteuerung 48" in der Lage ist, Iststatuswerte IS der Drehmaschine zu ermitteln, beispielsweise mit Statussensoren 112, 114, 116, 118, die beispielsweise anzeigen, ob ein Revolverkopf einer Bearbeitungseinheit 12, 14 nach einem Schaltzustand zutreffend verriegelt ist, ob durch eine der Arbeitseinheiten 12, 14 oder 16 eine bestimmte einzunehmende Stellung tatsächlich erreicht ist oder ob sonstige Zustände, die für einen ordnungsgemäßen Betrieb der Drehmaschine erforderlich sind, vorliegen oder aufrecht erhalten werden.

Auch diese Iststatuswerte IS werden bei diesem Ausführungsbeispiel der Simulationsprozessoreinheit 86 übermittelt, die auf der Basis dieser Iststatuswerte IS ebenfalls in der Lage ist, mittels im Speicher 88 gespeicherter grafischer Elemente diese Iststatuswerte für die Bedienungsperson auf der elektronischen Visualisierungseinrichtung 60 anzuzeigen.

Damit besteht die Möglichkeit, durch die Darstellung der Istzustandswerte IZ und der Iststatuswerte IS der Bedienungsperson auf der elektronischen Visualisierungseinrichtung 60 mehr Informationen zur Verfügung zu stellen, als diese bei reiner, selbst optimaler Beobachtung eines Arbeitsvorgangs in dem Arbeitsraum 30 haben könnte.

Wenn außerdem diese durch die Istzustandswerte IZ und Iststatuswerte IS von der Simulationsprozessoreinheit 86 erzeugten Bildinformationen ebenfalls in der Bildinformationsspeichereinheit 84 gespeichert werden, besteht im Fall eines Maschinenschadens eine noch umfassendere Möglichkeit, rückwirkend durch Betrachtung des Arbeitsvorgangs auf der elektronischen Visualisierungseinrichtung 60 zu analysieren, warum es zu einer Kollision oder einem Maschinenschaden gekommen sein könnte, wobei der Bedienungsperson mehr Zusatzinformationen hierzu zur Verfügung stehen, als dies bei optimaler Betrachtung des Arbeitsvorgangs zu jeder Zeit der Fall sein könnte.

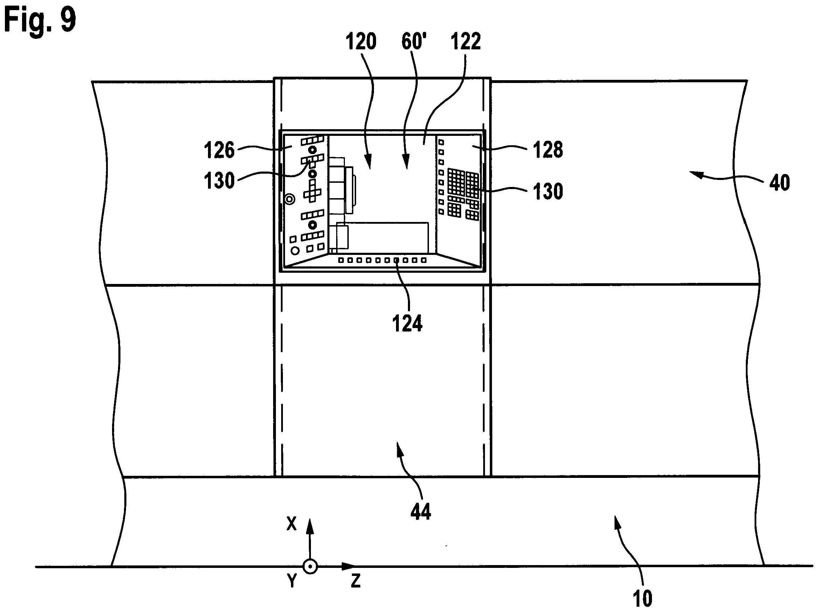

Bei einem sechsten Ausführungsbeispiel, dargestellt in Fig. 9 ist die Visualisierungseinrichtung 60' mit einer Anzeigefläche 120 versehen, welche in verschiedene Felder aufteilbar ist.

Beispielsweise umfasst die Anzeigefläche 120 ein Anzeigefeld 122 für die Darstellung eines Maschinenbildes, ein Anzeigefeld 124 für die Darstellung von Funktionsdaten der Maschinensteuerung 48 sowie Anzeigefelder 126 und 128, auf denen Bedienelemente 130 angezeigt werden, wobei die Anzeigefelder 126 und 128 gleichzeitig als Touchscreenfelder ausgebildet sind, das heißt, dass bei Berühren der in den Anzeigefeldern 126 und 128 angezeigten Bedienelemente 130 eine Funktionsbedienung entweder der Visualisierungsprozessoreinheit 80 oder der Maschinensteuerung 48 möglich ist.

Besonders günstig ist es dabei, wenn die Darstellung der Bedienelemente 130 und die diesen Bedienelementen 130 zugeordneten Bedienfunktionen in den Anzeigefeldern 126 und 128 durch eine Bediensoftware definierbar ist, so dass sowohl die Anordnung der Bedienelemente 130 als auch deren Funktionen durch die Bediensoftware definierbar sind.

Damit besteht die Möglichkeit, die den Bedienelementen 130 des Anzeigefeldes 126 zugewiesenen Funktionen auch den Bedienelementen 130 des Anzeigefeldes 128 zugeordneten Funktionen den Bedienelementen 130 im Anzeigefeld 126 zuzuweisen.

Somit besteht beispielsweise die Möglichkeit, durch gezielte Funktionszuordnung die Bedienelemente 130 der Anzeigefelder 126 und 128 sowohl für Rechtshänder als auch für Linkshänder ergonomisch günstig anzuordnen.

Ferner besteht noch durch die Bediensoftware die Möglichkeit, die Lage der Bedienelemente in den Anzeigefeldern 126 und 128 zumindest im Rahmen der von der Bediensoftware vorgegebenen Möglichkeiten zu variieren, um dadurch noch individuelle Anpassungen an die Wünsche der Bedienungsperson vornehmen zu können.

Bei diesem Ausführungsbeispiel erlaubt somit die Visualisierungseinrichtung 60' nicht nur die Darstellung der Bearbeitungseinheiten 12, 14, 16 oder der virtuellen Bearbeitungseinheiten 12V, 14V, 16V im Anzeigefeld 122, sondern auch noch die Darstellung von Funktionsdaten der Maschinensteuerung im Anzeigefeld 124 und außerdem noch die Bedienung sowohl der Visualisierungsprozessoreinheit 80 als auch der Maschinensteuerung 48 über die Bedienelemente 130 der Anzeigefelder 126 und 128, so dass eine einheitliche Bedienung der gesamten Drehmaschine über die Bedienelemente 130 der Anzeigefelder 126 und 128 möglich ist.

Besonders günstig ist es dabei, wenn je nach Wunsch der Bedienungsperson die Lage der Anzeigefelder 122, 124, 126, 128 frei wählbar ist, das heißt, wenn beispielsweise die Anzeigefelder 124 und 122 relativ zueinander unterschiedlich angeordnet werden können oder wenn beispielsweise auch die Anzeigefelder 126 und 128 relativ zu den Anzeigefeldern 122 und 124 ebenfalls in unterschiedlicher Art und Weise auf der Anzeigefläche 120 angeordnet werden können.

Im Übrigen sind diejenigen Elemente, die mit denen der voranstehenden Ausführungsbeispiele identisch sind, mit denselben Bezugszeichen versehen, so dass hinsichtlich der Beschreibung derselben auf die voranstehenden Ausführungsbeispiele Bezug genommen wird.

Insbesondere wird hinsichtlich der unterschiedlichen Ausbildungen der Wechselwirkung zwischen der Maschinensteuerung 48 und der Visualisierungsprozessoreinheit 80 sowie der Visualisierungseinrichtung 60 vollinhaltlich auf die voranstehenden Ausführungsbeispiele Bezug genommen, wobei bei dem sechsten Ausführungsbeispiel sämtliche Ausbildungen gemäß den ersten fünf Ausführungsbeispielen realisierbar sind.

## Patentansprüche

1. Drehmaschine umfassend ein Maschinengestell (10), mindestens eine am Maschinengestell (10) in einem Arbeitsraum (30) angeordnete, als Werkzeugträger ausgebildete erste Bearbeitungseinheit (12, 14) und mindestens eine an dem Maschinengestell (10) in dem Arbeitsraum (30) angeordnete, als Werkstückspindel ausgebildete zweite Bearbeitungseinheit (16), von denen mindestens eine zur Durchführung eines Arbeitsvorgangs durch eine Maschinensteuerung (48) gesteuert in dem Arbeitsraum (30) bewegbar ist, wobei der Drehmaschine eine elektronische Visualisierungseinrichtung (60) zugeordnet ist, auf welcher für eine Bedienungsperson im Arbeitsraum (30) stattfindende Arbeitsvorgänge durch Abbildungen von den als Werkzeugträger und Werkstückspindel ausgebildeten Bearbeitungseinheiten (12, 14, 16) im Wesentlichen synchron zu realen in der Drehmaschine stattfindenden Arbeitsvorgängen darstellbar sind,
**dadurch gekennzeichnet, dass** die elektronische
Visualisierungseinrichtung (60) in einem vom Arbeitsraum (30) durch eine Schutzwand (50) getrennten Bereich angeordnet ist, dass die Visualisierungseinrichtung (60) mit einer Visualisierungsprozessoreinheit (80) zusammenwirkt, welche Simulationen von Arbeitsvorgängen durchführt und einen von der Maschinensteuerung (48) aufgrund eines aktuell laufenden realen Arbeitsprogramms durchgeführten realen Arbeitsvorgang durch virtuelle Bearbeitungseinheiten (12V,14V, 16V) und Simulation von deren Bewegungen auf der Visualisierungseinrichtung (60) als virtuellen Arbeitsvorgang zeitsynchron mit dem tatsächlichen, in der Drehmaschine ablaufenden realen Arbeitsvorgang darstellt.

2. Drehmaschine nach Anspruch 1, **dadurch gekennzeichnet, dass** die elektronische Visualisierungseinrichtung (60) an einer Maschinenverhaubung (40) der Drehmaschine angeordnet ist.

3. Drehmaschine nach Anspruch 2, **dadurch gekennzeichnet, dass** die elektronische Visualisierungseinrichtung (60) nahe einer einer Zugangsöffnung (42) zum Arbeitsraum (30) angeordnet ist.

4. Drehmaschine nach einem der voranstehenden Ansprüche, **dadurch gekennzeichnet, dass** die von der Visualisierungseinrichtung (60) dargestellten Arbeitsvorgänge zeitversetzt zu den realen in der Drehmaschine stattfindenden Arbeitsvorgängen darstellbar sind.

5. Drehmaschine nach Anspruch 4, **dadurch gekennzeichnet, dass** ein von der Visualisierungseinrichtung (60) zeitversetzt dargestellter Arbeitsvorgang durch Speicherung von Bildinformationen in einer Bildinformationsspeichereinheit (84) und nachfolgende Reproduktion derselben erfolgt.

6. Drehmaschine nach Anspruch 4 oder 5, **dadurch gekennzeichnet, dass** ein von der Visualisierungseinrichtung (60) zeitversetzt dargestellter Arbeitsvorgang durch einen virtuellen Arbeitsvorgang, generiert durch vorauseilende Simulation eines realen Arbeitsvorgangs, darstellbar ist.

7. Drehmaschine nach einem der voranstehenden Ansprüche, **dadurch gekennzeichnet, dass** in dem Arbeitsraum (30) eine elektronische Bilderfassungseinrichtung (70, 72) vorgesehen ist und dass die von der Bilderfassungseinrichtung (70, 72) erfassten Bildinformationen auf der elektronischen Visualisierungseinrichtung (60) darstellbar sind.

8. Drehmaschine nach Anspruch 7, **dadurch gekennzeichnet, dass** die elektronische Bilderfassungseinrichtung (70, 72) im sichtbaren Spektralbereich arbeitet.

9. Drehmaschine nach Anspruch 7 oder 8, **dadurch gekennzeichnet, dass** die elektronische Bilderfassungseinrichtung (70, 72) im infraroten Spektralbereich arbeitet.

10. Drehmaschine nach einem der Ansprüche 7 bis 9, **dadurch gekennzeichnet, dass** die Bilderfassungseinrichtung (70, 72) mindestens einen elektronischen Bilderfassungschip aufweist.

11. Drehmaschine nach einem der voranstehenden Ansprüche, **dadurch gekennzeichnet, dass** die Visualisierungsprozessoreinheit (80) Relativbewegungen der Bearbeitungseinheiten (12, 14, 16) simuliert.

12. Drehmaschine nach Anspruch 11, **dadurch gekennzeichnet, dass** die Visualisierungsprozessoreinheit (80) Bewegungen von virtuellen Bearbeitungseinheiten (12V, 14V, 16V) der Drehmaschine auf der Visualisierungseinrichtung (60) darstellt.

13. Drehmaschine nach Anspruch 12, **dadurch gekennzeichnet, dass** die Visualisierungsprozessoreinheit (80) den geometrischen Formen der realen Bearbeitungseinheiten (12, 14, 16) entsprechende virtuelle Bearbeitungseinheiten (12V, 14V, 16V) ermittelt und auf der Visualisierungseinrichtung (60) darstellt.

14. Drehmaschine nach einem der Ansprüche 10 bis 12, **dadurch gekennzeichnet, dass** die Visualisierungsprozessoreinheit (80) ein Arbeitsprogramm realer Arbeitsvorgänge zur Simulation derselben und Darstellung eines virtuellen Arbeitsvorgangs mit den virtuellen Bearbeitungseinheiten (12V, 14V, 16V) heranzieht.

15. Drehmaschine nach einem der voranstehenden Ansprüche, **dadurch gekennzeichnet, dass** die Maschinensteuerung (48) die für die realen Bearbeitungseinheiten (12, 14, 16) der Drehmaschine ermittelten Größen (SP, IP) parallel zu ihrer Ermittlung der Visualisierungsprozessoreinheit (80) übermittelt.

16. Drehmaschine nach Anspruch 15, **dadurch gekennzeichnet, dass** die Maschinensteuerung (48) Positionswerte (SP, IP) der realen Bearbeitungseinheiten (12, 14, 16) der Visualisierungsprozessoreinheit (80) übermittelt.

17. Drehmaschine nach Anspruch 16, **dadurch gekennzeichnet, dass** die Visualisierungsprozessoreinheit (80) die virtuellen Bearbeitungseinheiten (12V, 14V, 16V) entsprechend den Positionswerten (SP, IP) der realen Bearbeitungseinheiten (12, 14, 16) relativ zueinander darstellt.

18. Drehmaschine nach Anspruch 16 oder 17, **dadurch gekennzeichnet, dass** die Positionswerte Sollpositionswerte (SP) der realen Bearbeitungseinheiten (12, 14,16) sind.

19. Drehmaschine nach einem der Ansprüche 16 oder 18, **dadurch gekennzeichnet, dass** die Maschinensteuerung (48) erfasste Istwerte (IP, IZ, IS) der realen Bearbeitungseinheiten (12, 14, 16) der Visualisierungsprozessoreinheit (80) zur Darstellung übermittelt.

20. Drehmaschine nach Anspruch 19, **dadurch gekennzeichnet, dass** die Istwerte Istpositionswerte (IP) von mindestens einer der Bearbeitungseinheiten (12, 14, 16) sind.

21. Drehmaschine nach Anspruch 20, **dadurch gekennzeichnet, dass** die Istpositionswerte (IP) mindestens eine Position mindestens einer der Bearbeitungseinheiten (12, 14, 16) längs mindestens einer der jeweiligen Bewegungsachsen (X, Y, Z) repräsentieren.

22. Drehmaschine nach einem der Ansprüche 19 bis 21, **dadurch gekennzeichnet, dass** die Istwerte Istzustandswerte (IZ) für mindestens eine der Größen wie Kraft auf eine Bearbeitungseinheit, Temperatur einer Bearbeitungseinheit, Kraft auf ein Werkzeug und Temperatur eines Werkzeugs, sind.

23. Drehmaschine nach einem der Ansprüche 19 bis 22, **dadurch gekennzeichnet, dass** die Istwerte Iststatuswerte (IS) von Maschinenelementen sind.

24. Drehmaschine nach Anspruch 23, **dadurch gekennzeichnet, dass** die Iststatuswerte (IS) mindestens eine Statusinformation aus den Statusinformationen wie "Zylinder vor", "Endlage erreicht", "Werkstück gespannt", "Werkzeug gespannt", sind.

25. Drehmaschine nach einem der Ansprüche 19 bis 24, **dadurch gekennzeichnet, dass** die Visualisierungsprozessoreinheit (86) die Istwerte (IP, IZ, IS) graphisch darstellt.

26. Drehmaschine nach Anspruch 25, **dadurch gekennzeichnet, dass** die Visualisierungsprozessoreinheit (80) die Istwerte (IP, IZ, IS) durch in einem Speicher (88) abgespeicherte graphische Elemente darstellt.

27. Drehmaschine nach Anspruch 26, **dadurch gekennzeichnet, dass** die abgespeicherten graphischen Elemente geometrische Konfigurationen von virtuellen Bearbeitungseinheiten (12V, 14V, 16V) sind.

28. Drehmaschine nach einem der Ansprüche 25 bis 27, **dadurch gekennzeichnet, dass** die Visualisierungsprozessoreinheit (80) die virtuellen Bearbeitungseinheiten (12V, 14V, 16V) entsprechend Istpositionswerten (IP) der korrespondierenden realen Bearbeitungseinheiten (12, 14, 16) graphisch darstellt.

29. Drehmaschine nach einem der Ansprüche 26 bis 28, **dadurch gekennzeichnet, dass** die abgespeicherten graphischen Elemente Zustandssymbole für Zustandsinformationen wie Kräfte oder Temperaturen umfassen.

30. Drehmaschine nach Anspruch 29, **dadurch gekennzeichnet, dass** die Zustandssymbole Kolorierungen von virtuellen Bearbeitungseinheiten (12, 14, 16) umfassen.

31. Drehmaschine nach Anspruch 29 oder 30, **dadurch gekennzeichnet, dass** die Zustandssymbole graphische Warnsymbole für mindestens eine der Größen wie Kraft oder Temperatur umfassen.

32. Drehmaschine nach einem der voranstehenden Ansprüche, **dadurch gekennzeichnet, dass** mit der Visualisierungsprozessoreinheit (80) ein Arbeitsvorgang in mehreren Darstellungsmodi darstellbar ist.

33. Drehmaschine nach einem der voranstehenden Ansprüche, **dadurch gekennzeichnet, dass** ein Darstellungsmodus die Darstellung des durch die Bilderfassungseinrichtung (70, 72) erfassten Arbeitsvorgangs ist.

34. Drehmaschine nach Anspruch 32 oder 33, **dadurch gekennzeichnet, dass** ein Darstellungsmodus die Darstellung eines simulierten Arbeitsvorgangs ist.

35. Drehmaschine nach einem der voranstehenden Ansprüche, **dadurch gekennzeichnet, dass** die verschiedenen Darstellungsmodi gleichzeitig auf der Visualisierungseinrichtung (60) darstellbar sind.

36. Drehmaschine nach einem der Ansprüche 32 bis 35, **dadurch gekennzeichnet, dass** die verschiedenen Darstellungsmodi durch übereinanderliegende Darstellungen darstellbar sind.

37. Drehmaschine nach einem der voranstehenden Ansprüche, **dadurch gekennzeichnet, dass** verschiedene Darstellungsmodi durch verschiedene übereinanderliegend dargestellte Darstellungsarten gleichzeitig auf der Visualisierungseinrichtung (60) darstellbar sind.

38. Drehmaschine nach einem der Ansprüche 32 bis 37, **dadurch gekennzeichnet, dass** eine Darstellungsart eine teiltransparente Darstellung ist.

39. Drehmaschine nach einem der Ansprüche 32 bis 38, **dadurch gekennzeichnet, dass** eine Darstellungsart eine Darstellung durch Umrisslinien ist.

40. Drehmaschine nach einem der Ansprüche 32 bis 39, **dadurch gekennzeichnet, dass** eine Darstellungsart eine Darstellung durch ein Vollbild ist.

41. Drehmaschine nach einem der voranstehenden Ansprüche, **dadurch gekennzeichnet, dass** der Visualisierungseinrichtung (60) ein Bedienfeld (126, 128) zugeordnet ist.

42. Drehmaschine nach Anspruch 41, **dadurch gekennzeichnet, dass** mit dem Bedienfeld (126, 128) eine Auswahl von Darstellungsmodus und/oder Darstellungsart durchführbar ist.

43. Drehmaschine nach Anspruch 41 oder 42, **dadurch gekennzeichnet, dass** das Bedienfeld (126, 128) in die Visualisierungseinrichtung (60') integriert ist.

44. Drehmaschine nach Anspruch 43, **dadurch gekennzeichnet, dass** das Bedienfeld (126, 128) als Touchscreen in die Visualisierungseinrichtung (60') integriert ist.

45. Drehmaschine nach Anspruch 44, **dadurch gekennzeichnet, dass** Bereiche des Touchscreens (126, 128) durch Bediensoftware funktionsdefinierbar sind.

46. Drehmaschine nach Anspruch 44 oder 45, **dadurch gekennzeichnet, dass** einzelne Bedienelemente (130) des Bedienfeldes (126, 128) durch Bediensoftware funktionsdefinierbar sind.

47. Drehmaschine nach einem der Ansprüche 41 bis 46, **dadurch gekennzeichnet, dass** die Bedienelemente (130) des Bedienfeldes (126, 128) für Rechtshänder funktionsdefinierbar sind.

48. Drehmaschine nach einem der Ansprüche 41 bis 46, **dadurch gekennzeichnet, dass** die Bedienelemente des Bedienfeldes für Linkshänder funktionsdefinierbar sind.

49. Drehmaschine nach einem der voranstehenden Ansprüche, **dadurch gekennzeichnet, dass** die Visualisierungseinrichtung (60') Funktionsdaten der Maschinensteuerung (48) anzeigt.

50. Drehmaschine nach Anspruch 49, **dadurch gekennzeichnet, dass** die Visualisierungseinrichtung (60') ein Anzeigefeld (124) für Informationen der Maschinensteuerung (48) aufweist.

51. Drehmaschine nach Anspruch 49 oder 50, **dadurch gekennzeichnet, dass** die Visualisierungseinrichtung (60') umschaltbar ist zwischen einer Funktionsdatenanzeige der Maschinensteuerung und einer Darstellung mindestens eines virtuellen oder realen Arbeitsvorgangs.

52. Drehmaschine nach einem der Ansprüche 49 bis 51, **dadurch gekennzeichnet, dass** ein Anzeigefeld (124) für die Funktionsdatenanzeige der Maschinensteuerung (48) wählbar auf einer Anzeigefläche (120) der Visualisierungseinrichtung (60') positionierbar ist.

53. Drehmaschine nach einem der Ansprüche 49 bis 52, **dadurch gekennzeichnet, dass** ein Anzeigefeld für ein Maschinenbild wählbar auf der Anzeigefläche der Visualisierungseinrichtung (60') positionierbar ist.

54. Drehmaschine nach einem der voranstehenden Ansprüche, **dadurch gekennzeichnet, dass** die Visualisierungseinrichtung (60) an einer die Zugangsöffnung (42) verschließenden Tür (44) der Maschinenverhaubung (40) angeordnet ist.

55. Drehmaschine nach Anspruch 54, **dadurch gekennzeichnet, dass** die Visualisierungseinrichtung (60) anstelle eines Sichtfensters an der Tür (44) vorgesehen ist.

56. Drehmaschine nach Anspruch 54 oder 55, **dadurch gekennzeichnet, dass** das Bedienfeld (126, 128) an der Tür (44) vorgesehen ist.

## Claims

1. Turning machine comprising a machine frame (10) at least one first processing unit (12, 14) configured as a workpiece carrier and disposed on the machine frame (10) in a work area (30) and at least one second processing unit (16) configured as a workpiece spindle and disposed on the machine frame (10) in the work area (30), at least one of which for carrying out an operation is movable in the work area (30) under the control of a machine controller (48), wherein associated with the turning machine is an electronic visualization device (60), on which for an operator operations occurring in the work area (30) can be displayed by means of images of the processing units (12, 14, 16) configured as a workpiece carrier and a workpiece spindle substantially in synchronism with real operations occurring in the turning machine,
**characterized in that** the electronic visualization device (60) is disposed in a region that is separated from the work area (30) by a protective wall (50), that the visualization device (60) interacts with a visualization processor unit (80) that carries out simulations of operations and displays a real operation, which is carried out by the machine controller (48) on the basis of a currently running real work program, by means of virtual processing units (12V, 14V, 16V) and simulation of movements thereof on the visualization device (60) as a virtual operation in time synchronism with the actual, real operation being executed in the turning machine.

2. Turning machine according to claim 1, **characterized in that** the electronic visualization device (60) is disposed on a machine hood (40) of the turning machine.

3. Turning machine according to claim 2, **characterized in that** the electronic visualization device (60) is disposed close to an an access opening (42) to the work area (30).

4. Turning machine according to one of the preceding claims, **characterized in that** the operations displayed by the visualization device (60) can be displayed time-shifted relative to the real operations occurring in the turning machine.

5. Turning machine according to claim 4, **characterized in that** an operation displayed in time-shifted manner by the visualization device (60) is effected by storing image data in an image data memory unit (84) and subsequently reproducing said image data.

6. Turning machine according to claim 4 or 5, **characterized in that** an operation displayed in time-shifted manner by the visualization device (60) can be displayed by means of a virtual operation, generated by advance simulation of a real operation.

7. Turning machine according to one of the preceding claims, **characterized in that** in the work area (30) an electronic image acquisition device (70, 72) is provided and that the image data acquired by the image acquisition device (70, 72) can be displayed on the electronic visualization device (60).

8. Turning machine according to claim 7, **characterized in that** the electronic image acquisition device (70, 72) operates in the visible spectral range.

9. Turning machine according to claim 7 or 8, **characterized in that** the electronic image acquisition device (70, 72) operates in the infrared spectral range.

10. Turning machine according to one of claims 7 to 9, **characterized in that** the image acquisition device (70, 72) comprises at least one electronic image acquisition chip.

11. Turning machine according to one of the preceding claims, **characterized in that** the visualization processor unit (80) simulates relative movements of the processing units (12, 14, 16).

12. Turning machine according to claim 11, **characterized in that** the visualization processor unit (80) displays movements of virtual processing units (12V, 14V, 16V) of the turning machine on the visualization device (60).

13. Turning machine according to claim 12, **characterized in that** the visualization processor unit (80) determines virtual processing units (12V, 14V, 16V) corresponding to the geometric shapes of the real processing units (12, 14, 16) and displays them on the visualization device (60).

14. Turning machine according to one of claims 10 to 12, **characterized in that** the visualization processor unit (80) uses a work program of real operations to simulate real operations and to display a virtual operation with virtual processing units (12V, 14V, 16V).

15. Turning machine according to one of the preceding claims, **characterized in that** the machine controller (48) communicates the variables (SP, IP), that are determined for the real processing units (12, 14, 16) of the turning machine, in parallel to their determination, to the visualization processor unit (80).

16. Turning machine according to claim 15, **characterized in that** the machine controller (48) communicates position values (SP, IP) of the real processing units (12, 14, 16) to the visualization processor unit (80).

17. Turning machine according to claim 16, **characterized in that** the visualization processor unit (80) displays the virtual processing units (12V, 14V, 16V) relative to one another in accordance with the position values (SP, IP) of the real processing units (12, 14, 16).

18. Turning machine according to claim 16 or 17, **characterized in that** the position values are setpoint position values (SP) of the real processing units (12, 14, 16).

19. Turning machine according to one of claims 16 or 18, **characterized in that** the machine controller (48) communicates acquired actual values (IP, IZ, IS) of the real processing units (12, 14, 16) to the visualization processor unit (80) for display purposes.

20. Turning machine according to claim 19, **characterized in that** the actual values are actual position values (IP) of at least one of the processing units (12, 14, 16).

21. Turning machine according to claim 20, **characterized in that** the actual position values (IP) represent at least one position of at least one of the processing units (12, 14, 16) along at least one of the respective axes of motion (X, Y, Z).

22. Turning machine according to one of claims 19 to 21, **characterized in that** the actual values are actual state values (IZ) of at least one of the variables such as force upon a processing unit, temperature of a processing unit, force upon a tool and temperature of a tool.

23. Turning machine according to one of claims 19 to 22, **characterized in that** the actual values are actual status values (IS) of machine elements.

24. Turning machine according to claim 23, **characterized in that** the actual status values (IS) are at least one piece of status information from the status information such as "cylinder forward", "final position reached", "workpiece clamped", "tool chucked".

25. Turning machine according to one of claims 19 to 24, **characterized in that** the visualization processor unit (86) graphically displays the actual values (IP, IZ, IS).

26. Turning machine according to claim 25, **characterized in that** the visualization processor unit (80) displays the actual values (IP, IZ, IS) by means of graphical elements stored in a memory (88).

27. Turning machine according to claim 26, **characterized in that** the stored graphical elements are geometric configurations of virtual processing units (12V, 14V, 16V).

28. Turning machine according to one of claims 25 to 27, **characterized in that** the visualization processor unit (80) graphically displays the virtual processing units (12V, 14V, 16V) in accordance with actual position values (IP) of the corresponding real processing units (12, 14, 16).

29. Turning machine according to one of claims 26 to 28, **characterized in that** the stored graphical elements comprise state symbols for state information such as forces or temperatures.

30. Turning machine according to claim 29, **characterized in that** the state symbols comprise colourings of virtual processing units (12, 14, 16).

31. Turning machine according to claim 29 or 30, **characterized in that** the state symbols comprise graphical warning symbols for at least one of the variables such as force or temperature.

32. Turning machine according to one of the preceding claims, **characterized in that** by means of the visualization processor unit (80) an operation can be displayed in a plurality of display modes.

33. Turning machine according to one of the preceding claims, **characterized in that** one display mode is the displaying of the operation acquired by the image acquisition device (70, 72).

34. Turning machine according to claim 32 or 33, **characterized in that** one display mode is the displaying of a simulated operation.

35. Turning machine according to one of the preceding claims, **characterized in that** the various display modes can be displayed simultaneously on the visualization device (60).

36. Turning machine according to one of claims 32 to 35, **characterized in that** the various display modes can be displayed by means of superimposed displays.

37. Turning machine according to one of the preceding claims, **characterized in that** various display modes can be displayed simultaneously on the visualization device (60) by displaying various types of display in a superimposed manner.

38. Turning machine according to one of claims 32 to 37, **characterized in that** one type of display is a partially transparent display.

39. Turning machine according to one of claims 32 to 38, **characterized in that** one type of display is an outline display.

40. Turning machine according to one of claims 32 to 39, **characterized in that** one type of display is a full picture display.

41. Turning machine according to one of the preceding claims, **characterized in that** an operator control panel (126, 128) is associated with the visualization device (60).

42. Turning machine according to claim 41, **characterized in that** by means of the operator control panel (126, 128) a selection of display mode and/or type of display can be carried out.

43. Turning machine according to claim 41 or 42, **characterized in that** the operator control panel (126, 128) is integrated into the visualization device (60').

44. Turning machine according to claim 43, **characterized in that** the operator control panel (126, 128) is integrated as a touch screen into the visualization device (60).

45. Turning machine according to claim 44, **characterized in that** areas of the touch screen (126, 128) are functionally definable by means of operator control software.

46. Turning machine according to claim 44 or 45, **characterized in that** individual operator control elements (130) of the operator control panel (126, 128) are functionally definable by means of operator control software.

47. Turning machine according to one of claims 41 to 46, **characterized in that** the operator control elements (130) of the operator control panel (126, 128) are functionally definable for right-handed personnel.

48. Turning machine according to one of claims 41 to 46, **characterized in that** the operator control elements of the operator control panel are functionally definable for left-handed personnel.

49. Turning machine according to one of the preceding claims, **characterized in that** the visualization device (60') indicates function data of the machine controller (48).

50. Turning machine according to claim 49, **characterized in that** the visualization device (60') comprises an indicator panel (124) for information regarding the machine controller (48).

51. Turning machine according to claim 49 or 50, **characterized in that** the visualization device (60') can be switched between a function data indication of the machine controller and a display of at least one virtual or real operation.

52. Turning machine according to one of claims 49 to 51, **characterized in that** an indicator panel (124) for the function data indication of the machine controller (48) is selectively positionable on an indication area (120) of the visualization device (60').

53. Turning machine according to one of claims 49 to 52, **characterized in that** an indicator panel for a machine image is selectively positionable on the indication area of the visualization device (60').

54. Turning machine according to one of the preceding claims, **characterized in that** the visualization device (60) is disposed on a door (44) of the machine hood (40) that closes the access opening (42).

55. Turning machine according to claim 54, **characterized in that** the visualization device (60) is provided instead of an inspection window on the door (44).

56. Turning machine according to claim 54 or 55, **characterized in that** the operator control panel (126, 128) is provided on the door (44).

## Revendications

1. Tour comportant un bâti de machine (10), au moins une première unité d'usinage (12, 14) disposée sur le bâti de machine (10) dans un espace de travail (30), réalisée comme support d'outil et au moins une seconde unité d'usinage (16) disposée sur le bâti de machine (10) dans l'espace de travail (30), réalisée comme broche de pièce, dont au moins l'une peut être déplacée, commandée par une commande de machine (48), pour la réalisation d'un processus de travail dans l'espace de travail (30), au tour étant associé un dispositif de visualisation électronique (60), sur lequel des processus de travail ayant lieu dans l'espace de travail (30) peuvent être représentés par des illustrations d'unités d'usinage (12, 14, 16) réalisées comme support d'outil et broche de pièce pour un opérateur de manière essentiellement synchrone aux processus de travail réels ayant lieu dans le tour,
**caractérisé en ce que** le dispositif de visualisation électronique (60) est disposé dans une zone séparée de l'espace de travail (30) par une paroi de protection (50), **en ce que** le dispositif de visualisation (60) coopère avec une unité de processeur de visualisation (80) qui réalise des simulations de processus de travail et représente un processus de travail réel réalisé par la commande de machine (48) en raison d'un programme de travail réel se déroulant actuellement par des unités d'usinage virtuelles (12V, 14V, 16V) et une simulation de leurs déplacements sur le dispositif de visualisation (60) comme processus de travail virtuel de manière synchrone avec le processus de travail réel effectif se déroulant dans le tour.

2. Tour selon la revendication 1, **caractérisé en ce que** le dispositif de visualisation électronique (60) est disposé sur un capot (40) du tour.

3. Tour selon la revendication 2, **caractérisé en ce que** le dispositif de visualisation électronique (60) est disposé près d'une ouverture d'accès (42) à l'espace de travail (30).

4. Tour selon l'une quelconque des revendications précédentes, **caractérisé en ce que** les processus de travail représentés par le dispositif de visualisation (60) peuvent être représentés en décalage dans le temps par rapport aux processus de travail réels ayant lieu dans le tour.

5. Tour selon la revendication 4, **caractérisé en ce qu'**un processus de travail représenté en décalage dans le temps par le dispositif de visualisation (60) est effectué par enregistrement des informations d'image dans une unité d'enregistrement des informations d'image (84) et reproduction suivante de celles-ci.

6. Tour selon la revendication 4 ou 5, **caractérisé en ce qu'**un processus de travail représenté en décalage dans le temps par le dispositif de visualisation (60) peut être représenté par un processus de travail virtuel généré par une simulation préalable d'un réel processus de travail.

7. Tour selon l'une quelconque des revendications précédentes, **caractérisé en ce que** dans l'espace de travail (30) est prévu un dispositif d'acquisition d'image électronique (70, 72) et **en ce que** les informations d'image acquises par le dispositif d'acquisition d'image (70, 72) peuvent être représentées sur le dispositif de visualisation électronique (60).

8. Tour selon la revendication 7, **caractérisé en ce que** le dispositif d'acquisition d'image électronique (70, 72) travaille dans le domaine spectral visible.

9. Tour selon la revendication 7 ou 8, **caractérisé en ce que** le dispositif d'acquisition d'image électronique (70, 72) travaille dans le domaine spectral infrarouge.

10. Tour selon l'une quelconque des revendications 7 à 9, **caractérisé en ce que** le dispositif d'acquisition d'image (70, 72) présente au moins une puce d'acquisition d'image électronique.

11. Tour selon l'une quelconque des revendications précédentes, **caractérisé en ce que** l'unité de processeur de visualisation (80) simule des mouvements relatifs des unités d'usinage (12, 14, 16).

12. Tour selon la revendication 11, **caractérisé en ce que** l'unité de processeur de visualisation (80) représente des mouvements d'unités d'usinage virtuelles (12V, 14V, 16V) du tour sur le dispositif de visualisation (60).

13. Tour selon la revendication 12, **caractérisé en ce que** l'unité de processeur de visualisation (80) détermine des unités d'usinage virtuelles (12V, 14V, 16V) correspondant aux formes géométriques des unités d'usinage réelles (12, 14, 16) et les représente sur le dispositif de visualisation (60).

14. Tour selon l'une quelconque des revendications 10 à 12, **caractérisé en ce que** l'unité de processeur de visualisation (80) consulte un programme de travail de processus de travail réels pour leur simulation et la représentation d'un processus de travail virtuel avec des unités d'usinage virtuelles (12V, 14V, 16V).

15. Tour selon l'une quelconque des revendications précédentes, **caractérisé en ce que** la commande de machine (48) transmet les grandeurs (SP, IP) déterminées pour les unités d'usinage réelles (12, 14, 16) du tour parallèlement à leur détermination à l'unité de processeur de visualisation (80).

16. Tour selon la revendication 15, **caractérisé en ce que** la commande de machine (48) transmet des valeurs de position (SP, IP) des unités d'usinage réelles (12, 14, 16) à l'unité de processeur de visualisation (80).

17. Tour selon la revendication 16, **caractérisé en ce que** l'unité de processeur de visualisation (80) représente les unités d'usinage virtuelles (12V, 14V, 16V) les unes par rapport aux autres selon les valeurs de position (SP, IP) des unités d'usinage réelles (12, 14, 16).

18. Tour selon la revendication 16 ou 17, **caractérisé en ce que** les valeurs de position sont des valeurs de position de consigne (SP) des unités d'usinage réelles (12, 14, 16).

19. Tour selon l'une quelconque des revendications 16 ou 18, **caractérisé en ce que** la commande de machine (48) transmet des valeurs réelles acquises (IP, IZ, IS) des unités d'usinage réelles (12, 14, 16) à l'unité de processeur de visualisation (80) à des fins de représentation.

20. Tour selon la revendication 19, **caractérisé en ce que** les valeurs réelles sont des valeurs de position réelles (IP) d'au moins l'une des unités d'usinage (12, 14, 16).

21. Tour selon la revendication 20, **caractérisé en ce que** les valeurs de position réelles (IP) représentent au moins une position au moins de l'une des unités d'usinage (12, 14, 16) le long d'au moins l'un des axes de déplacement respectifs (X, Y, Z).

22. Tour selon l'une quelconque des revendications 19 à 21, **caractérisé en ce que** les valeurs réelles sont des valeurs d'état réelles (IZ) pour au moins l'une des grandeurs telles que la force sur une unité d'usinage, la température d'une unité d'usinage, la force sur un outil et la température d'un outil.

23. Tour selon l'une quelconque des revendications 19 à 22, **caractérisé en ce que** les valeurs réelles sont des valeurs de statut réelles (IS) d'éléments de machine.

24. Tour selon la revendication 23, **caractérisé en ce que** les valeurs de statut réelles (IS) sont au moins une information de statut provenant des informations de statut telles que "cylindre devant", "position finale atteinte", "pièce serrée", "outil serré".

25. Tour selon l'une quelconque des revendications 19 à 24, **caractérisé en ce que** l'unité de processeur de visualisation (86) représente graphiquement les valeurs réelles (IP, IZ, IS).

26. Tour selon la revendication 25, **caractérisé en ce que** l'unité de processeur de visualisation (80) représente les valeurs réelles (IP, IZ, IS) par des éléments graphiques enregistrés dans une mémoire (88).

27. Tour selon la revendication 26, **caractérisé en ce que** les éléments graphiques enregistrés sont des configurations géométriques d'unités d'usinage virtuelles (12V, 14V, 16V).

28. Tour selon l'une quelconque des revendications 25 à 27, **caractérisé en ce que** l'unité de processeur de visualisation (80) représente graphiquement les unités d'usinage virtuelles (12V, 14V, 16V) selon des valeurs de position réelles (IP) des unités d'usinage réelles correspondantes (12, 14, 16).

29. Tour selon l'une quelconque des revendications 26 à 28, **caractérisé en ce que** les éléments graphiques enregistrés comportent des symboles d'état pour des informations d'état telles que les forces ou les températures.

30. Tour selon la revendication 29, **caractérisé en ce que** les symboles d'état comportent des coloriages d'unités d'usinage virtuelles (12V, 14V, 16V).

31. Tour selon la revendication 29 ou 30, **caractérisé en ce que** les symboles d'état comportent des symboles d'avertissement graphiques pour au moins l'une des grandeurs telles que la force ou la température.

32. Tour selon l'une quelconque des revendications précédentes, **caractérisé en ce qu'**un processus de travail peut être représenté dans plusieurs modes de représentation avec l'unité de processeur de visualisation (80).

33. Tour selon l'une quelconque des revendications précédentes, **caractérisé en ce qu'**un mode de représentation est la représentation du processus de travail acquis par le dispositif d'acquisition d'image (70, 72).

34. Tour selon la revendication 32 ou 33, **caractérisé en ce qu'**un mode de représentation est la représentation d'un processus de travail simulé.

35. Tour selon l'une quelconque des revendications précédentes, **caractérisé en ce que** les différents modes de représentation peuvent être représentés en même temps sur le dispositif de visualisation (60).

36. Tour selon l'une quelconque des revendications 32 à 35, **caractérisé en ce que** les différents modes de réalisation peuvent être représentés par des représentations se trouvant les unes au-dessus des autres.

37. Tour selon l'une quelconque des revendications précédentes, **caractérisé en ce que** différents modes de représentation peuvent être représentés en même temps sur le dispositif de visualisation (60) par différents types de représentation représentés les uns au-dessus des autres.

38. Tour selon l'une quelconque des revendications 32 à 37, **caractérisé en ce qu'**un type de représentation est une représentation partiellement transparente.

39. Tour selon l'une quelconque des revendications 32 à 38, **caractérisé en ce qu'**un type de représentation est une représentation par des lignes de contour.

40. Tour selon l'une quelconque des revendications 32 à 39, **caractérisé en ce qu'**un type de représentation est une représentation par une image pleine page.

41. Tour selon l'une quelconque des revendications précédentes, **caractérisé en ce qu'**au dispositif de visualisation (60) est associé un pupitre de commande (126, 128).

42. Tour selon la revendication 41, **caractérisé en ce qu'**une sélection du mode de représentation et/ou du type de représentation peut être réalisée avec le pupitre de commande (126, 128).

43. Tour selon la revendication 41 ou 42, **caractérisé en ce que** le pupitre de commande (126, 128) est intégré dans le dispositif de visualisation (60').

44. Tour selon la revendication 43, **caractérisé en ce que** le pupitre de commande (126, 128) est intégré comme un écran tactile dans le dispositif de visualisation (60').

45. Tour selon la revendication 44, **caractérisé en ce que** les fonctions des zones de l'écran tactile (126, 128) peuvent être définies par le logiciel de commande.

46. Tour selon la revendication 44 ou 45, **caractérisé en ce que** les fonctions des éléments de commande individuels (130) du pupitre de commande (126, 128) peuvent être définies par le logiciel de commande.

47. Tour selon l'une quelconque des revendications 41 à 46, **caractérisé en ce que** les fonctions des éléments de commande (130) du pupitre de commande (126, 128) peuvent être définies pour des droitiers.

48. Tour selon l'une quelconque des revendications 41 à 46, **caractérisé en ce que** les fonctions des éléments de commande du pupitre de commande peuvent être définies pour des gauchers.

49. Tour selon l'une quelconque des revendications précédentes, **caractérisé en ce que** le dispositif de visualisation (60') affiche des données fonctionnelles de la commande de machine (48).

50. Tour selon la revendication 49, **caractérisé en ce que** le dispositif de visualisation (60') présente un champ d'affichage (124) pour des informations de la commande de machine (48).

51. Tour selon la revendication 49 ou 50, **caractérisé en ce que** le dispositif de visualisation (60') peut être commuté entre un affichage de données fonctionnelles de la commande de machine et une représentation au moins d'un processus de travail virtuel ou réel.

52. Tour selon l'une quelconque des revendications 49 à 51, **caractérisé en ce qu'**un champ d'affichage (124) pour l'affichage de données fonctionnelles de la commande de machine (48) peut être positionné de manière sélective sur une surface d'affichage (120) du dispositif de visualisation (60').

53. Tour selon l'une quelconque des revendications 49 à 52, **caractérisé en ce qu'**un champ d'affichage pour une image de machine peut être positionné de manière sélective sur la surface d'affichage du dispositif de visualisation (60').

54. Tour selon l'une quelconque des revendications précédentes, **caractérisé en ce que** le dispositif de visualisation (60) est disposé sur une porte (44) fermant l'ouverture d'accès (42) du capot de la machine (40).

55. Tour selon la revendication 54, **caractérisé en ce que** le dispositif de visualisation (60) est prévu à la place d'une fenêtre d'inspection sur la porte (44).

56. Tour selon la revendication 54 ou 55, **caractérisé en ce que** le pupitre de commande (126, 128) est prévu sur la porte (44).
